# EUROPEAN PATENT SPECIFICATION

(11) **EP 2 224 057 B1**
(45) Date of publication and mention of the grant of the patent: **21.03.2012**
(21) Application number: 09252911.4
(22) Date of filing: 24.12.2009
(51) Int. Cl.: D21F 9/00, D21B 1/32, D21D 1/30

(54) **Pulp manufacturing method of used paper recycling apparatus, pulp manufacturing device of used paper recycling apparatus, and used paper recycling apparatus**
Pulpenherstellungsverfahren für eine Recyclingvorrichtung für benutztes Papier, Pulpenherstellungsvorrichtung für eine Recyclingvorrichtung für benutztes Papier und Recyclingvorrichtung für benutztes Papier
Procédé de fabrication de pâte d'un appareil de recyclage de papier usagé, dispositif de fabrication de pâte d'un appareil de recyclage de papier usagé et appareil de recyclage de papier usagé

(30) Priority: 07.02.2009 JP 2009026822
(43) Date of publication of application: 01.09.2010
(73) Proprietor: Seed Company Ltd., Osaka (JP)
(72) Inventor: Tamai, Shigeru, Osaka-shi, Osaka (JP); Koyama, Yuji, Osaka-shi, Osaka (JP)
(74) Representative: Mounteney, Simon James

(56) References cited:
- EP-A1- 1 239 074
- EP-A1- 1 947 235

## Description

### BACKGROUND OF THE INVENTION

### Field of the Invention

The present invention relates to a pulp manufacturing method of used paper recycling apparatus, a pulp manufacturing device of used paper recycling apparatus, and a used paper recycling apparatus, and more particularly to a pulp manufacturing technology in a small-sized used paper recycling apparatus of furniture size to be installed at the site of origin of used paper, for recycling and processing into re-usable paper at the same site, without disposing or discarding the discharged used paper.

### Description of the Related Art

In daily activities at government offices or private companies, and in general household activities, used and unnecessary papers and documents are discarded as so-called used paper. Such pieces of used paper are generally discarded or incinerated as refuse, or disposed and discarded.

On the other hand, among the global mounting concern about effective utilization of limited resources on the earth, various technologies have been developed for effective use of discarded used paper without disposal.

These used paper recycling technologies are mostly developed and executed in the paper making field, and such used paper recycling facilities require a tremendous investment, same as in ordinary paper making facilities, such as a vast land, enough money, and a huge volume of water and chemicals for paper making, for high speed and mass production of recycled paper and higher quality.

Recycling of used paper requires a huge manual labor for collecting used paper, and collection of used paper involves many problems, such as mixing of foreign matter by collection by mass people, defective sorting by lack of knowledge about recycling from used paper, and removal of debris, and if used paper is collected, further sorting and cleaning by professionals may be needed until the used paper is recycled by 100%. Moreover, confidential documents are not discarded easily from the viewpoint of confidentially, and are usually disposed by incineration, and recycling is not promoted.

To solve these problems in used paper collection, it is effective to develop a technology of collecting and recycling at the site of origin of used paper, and from this point of view, the present applicant developed and presented a used paper recycling apparatus as disclosed, for example, in Japanese Patent Application Laid-Open No. 2007-308837.

This used paper recycling apparatus has realized a used paper recycling technology of a large size equal to a used paper recycling plant, in a small size to be installed in a small shop, or in a room of general household, and the apparatus is contained in an apparatus case of furniture size, and includes a pulp making unit for making used paper pulp by fragmenting and beating used paper, a paper making unit for manufacturing recycled paper from the used paper pulp manufactured in the pulp making unit, and a control unit for driving and controlling by interlocking the pulp making unit and the paper making unit, and the pulp making unit consists of a fragmenting unit for agitating, grinding and fragmenting the used paper and a beating unit for beating the used paper fragmented in the fragmenting unit.

The used paper is agitated, fragmented and beaten by the fragmenting unit of the pulp making unit, and made into pulp, and is further beaten and pulverized by the beating unit, and a desired used paper pulp is prepared, which is made into recycled paper later by the paper making unit. In this case, in the pulp making process, the used paper is decomposed into a fiber level, and the written characters and drawings are completely decomposed and destroyed, and cannot be restored, and leak or disclosure of confidential information and personal information composed of characters and drawings can be securely prevented.

EP 1 947 235 A1 discloses a used paper recycling apparatus having the features of the preamble of Claim 1.

### SUMMARY OF THE INVENTION

It is hence a primary object of the present invention to present a novel pulp making technology of a used paper recycling apparatus capable of solving the problems of the prior art.

It is other object of the present invention to present a pulp making technology for realizing a used paper recycling apparatus of furniture size to be installed not only in a large office, but also in a small shop or a room in general household, being friendly to the environment and low in running cost, capable of preventing leak or disclosure of confidential information, personal information or various data securely, and keeping a high confidentiality, by further improving and specializing the mechanical technology of the pulp making section in the used paper recycling apparatus.

To achieve the objects, the pulp making method of the used paper recycling apparatus of the present invention, the used paper recycling being installed in an apparatus case of furniture size, is a pulp making method including the pulp making process in the used paper recycling apparatus for executing a pulp making process of fragmenting and beating the used paper to make used paper pulp, and a paper making process of manufacturing recycling paper by making from the used paper pulp manufactured in the pulp making process, including a fragmenting process of agitating, grinding and fragmenting the used paper, and a beating process of beating the used paper fragmented in the fragmenting process, and in the beating process, a used paper pulp circulation route is formed by disposing at least one beating means having a pair of relatively rotating beating disks, beating action surfaces of the beating disks are disposed oppositely across a tiny beating gap, and and the used paper pulp being beaten by the beating mans is circulated in the used pulp circulation route while the beating process is executed, and the beating gap of the beating action surfaces is controlled to be narrower gradually from the beginning to the end of the beating process.

A preferred embodiment may be composed as follows.
(1) In the beating process, the beating gap of the beating means is controlled to be narrowed in gradual steps from the beginning till the end of the beating process.
(2) In the beating process, the beating gap of the beating means is controlled to be narrowed gradually and continuously from the beginning till the end of the beating process.
(3) The fragmenting process is characterized by charging the used paper into fragmenting tank and supplying water into the fragmenting tank in a quantity corresponding to the charged amount of the used paper, and agitating the used paper and water by agitating means disposed rotatably in the fragmenting tank, thereby the used paper is fragmented and beaten the used paper.
(4) The supply amount of water in the fragmenting process is determined so that the concentration of the used paper pulp fragmented and beaten by the agitating means may be a maximum allowable concentration for the beating capacity of the beating means in the subsequent beating process.

The pulp making device of the used paper recycling apparatus of the present invention is for executing the pulp making method, being a pulp making device of the used paper recycling apparatus being installed in an apparatus case of furniture size, and comprising a fragmenting unit of agitating, grinding and fragmenting the used paper, and a beating unit of beating the used paper fragmented in the fragmenting unit, and the beating unit forms a used paper pulp circulation route by disposing at least one beating means for beating the used paper pulp, and includes circulating means for circulating the used paper pulp in the used paper pulp circulation route, and beating control means for controlling by mutually cooperating the beating means and the circulating means, and the beating means is formed as a grinder having a pair of beating disks rotated and driven relatively, a beating action surfaces of the beating disks are disposed oppositely across a tiny beating gap, and the beating control means is composed to control the beating means and the circulating means so as to execute the above beating process.

A preferred embodiment may be composed as follows.
(1) The beating means is formed as a grinder having a pair of beating disks rotated and driven relatively, a beating action surfaces of the beating disks are disposed oppositely across a tiny beating gap, and the beating action surfaces are provided with annular flat surfaces formed on the outer circumference of the beating disks, and the annular flat surfaces form the beating gap.
(2) The beating means includes a beating tank having a supply port for supplying the used paper pulp from the upstream side and a discharge port for discharging the beaten used paper pulp to the downstream side, a pair of beating disks disposed relatively and rotatably in the beating tank, and a rotation drive source for rotating and moving these beating disks relatively, in which the used paper pulp supplied from the supply port is pressurized and beaten by the beating action surfaces while being passed through the beating gap between the beating disks.
(3) Gap adjusting means is provided for moving the pair of beating disks relatively in the rotation axial direction, and adjusting the beating gap of these beating disks.
(4) One of the pair of beating disks is a fixed beating disk provided fixedly in the rotating direction, and the other is a rotatable beating disk provided rotatably, and an inlet communicating with the supply port of the beating tank is formed in a central position of the beating action surface of the fixed beating disk, and two annular flat surfaces formed on the outer peripheral edge of the beating action surfaces of the pair of beating disks form an exit communicating with a discharge port of the beating tank and having the beating gap.
(5) The beating action surfaces are grinding surfaces formed by coupling multiple abrasive grains by means of a binding material.
(6) The fragmenting unit includes a fragmenting tank having a used paper feed port for feeding and supplying the used paper, and a discharge port for discharging the fragmented used paper pulp to the downstream side, and this fragmenting tank has rotatable agitating means, and the used paper supplied from the used paper feed port is mixed with water and agitated by the agitating means, and fragmented and beaten.
(7) The fragmenting unit has water feed means for supplying water into the fragmenting tank.
(8) Shredder means is provided at the used paper feed port of the fragmenting tank, and the used paper supplied into the used paper feed port is preliminarily shredded by the shredder means, and is agitated by the agitating means.
(9) In the used paper pulp circulation route, the fragmenting tank of the fragmenting unit is included, and when executing the beating method, the agitating means of the fragmenting unit is driven and controlled.
(10) In the used paper pulp circulation route, a bypass route including a reserve tank for storing the used paper pulp beaten by the beating means is connected by way of changeover means, and when executing the beating method, the changeover means is driven and controlled so as to change over and use the fragmenting tank of the fragmenting unit and the reserve tank of the bypass route selectively.

The used paper recycling apparatus of the present invention includes, in an apparatus case of furniture size, a pulp making unit for fragmenting and beating the used paper to make used paper pulp, a paper making unit for making the used paper pulp manufactured in the pulp making unit and producing recycled paper, and a device control unit for driving and controlling in cooperation with the pulp making unit and the paper making unit, in which the pulp making unit is composed of the pulp making device described above.

A preferred embodiment may be composed as follows.
(1) The constitution includes pulp concentration adjusting means for adjusting the mixing rate of used paper and water charged the apparatus, and adjusting the concentration of the used paper pulp supplied in the paper making unit, and this pulp concentration adjusting means comprises beating concentration adjusting means for adjusting the beating concentration of the used paper pulp in the pulp making unit corresponding to the beating efficiency by the beating means, paper making concentration adjusting means for adjusting the paper making concentration of the used paper pulp in the paper making unit corresponding to the finished paper quality of the recycled paper, and pulp concentration control means for driving and controlling in cooperation with the beating concentration adjusting means and the paper making concentration adjusting means.
(2) The paper making concentration adjusting means comprises division extracting means for extracting a division only for a specified small portion out of the whole volume of the used paper pulp manufactured in the pulp making section in the preceding process, suspension preparing means for preparing a pulp suspension of a specified concentration, by adding a specified amount of water for concentration adjustment to the specified small portion of used paper pulp divided and extracted by the division extracting means, and paper making concentration control means for driving and controlling in cooperation with the division extracting means and the suspension preparing means.
(3) The pulp concentration adjusting means is weight type means for adjusting the mixing rate of the used paper and the water charged in the apparatus by measuring the weight, and adjusting the concentration of the used paper pulp supplied in the paper making unit.
   (I) In the present invention, the pulp making process of manufacturing used paper pulp by fragmenting and beating the used paper in the used paper recycling apparatus includes a fragmenting process of agitating, crushing and fragmenting the used paper, and a beating process of beating the used paper fragmented in the fragmenting process, and in the beating process, beating action surfaces are disposed oppositely across a tiny beating gap, and by using at least one beating means having a pair of beating disks rotating relatively, a used paper pulp circulation route is formed, and the used paper pulp beaten by the beating means is circulated in the used paper pulp circulation route while the beating process is being executed, and the beating gap of the beating action surfaces is gradually narrowed from the beginning till the end of the beating process, and therefore smooth and efficient beating is realized from the beginning till the end of the beating process.

That is, for example, in an early stage of beating, the beating gap of the beating action surfaces is set to a clearance dimension corresponding to the size of the fibers of used paper pulp fragmented in the preceding fragmenting process, and hence the used paper pulp is smoothly promoted to pass through the beating gap, and a high beating rate is achieved, and in a later stage of beating, the clearance dimension is adjusted to a size capable of beating to fibers of used paper pulp of desired finishing dimension, so that the used paper pulp of desired fiber size will be obtained finally. As a result, a smooth and efficient beating is realized from the beginning till the end of the beating process.

Accordingly, the used paper is decomposed into fiber level (to be pulp), and the written characters and drawing are completely removed and eliminated, and cannot be restored, and leak of disclosure of confidential information or personal information written in characters and drawings can be prevented securely, and a high confidentiality is assured.
(II) Moreover, for such smooth and efficient beating, large power is not needed, and the used paper recycling apparatus of furniture size can be installed in a small shop, small office or household room, and leak or disclosure of any information written in various documents can be securely prevented, from the individual level of private letters in general household, to the public level of confidential documents in government offices and private enterprises, and the running cost is also low.
(III) The used paper pulp circulation route is formed by disposing at least one beating means, and the used paper pulp beaten by the beating means is circulated in the used paper pulp circulation route in the beating process, so that the used paper pulp may be beaten efficiently according to the purpose, and an appropriate beating effect will be obtained.

In particular, because of the used paper recycling apparatus of furniture size, the used paper pulp beating process route of an infinite length basically not limited in length can be formed in a limited process space, and the compact used paper recycling apparatus of furniture size is capable of assuring a wide beating process space nearly equal to the beating process in a large apparatus.
(IV) Also having pulp concentration adjusting means for adjusting the concentration of the used paper pulp supplied in the paper making unit, this pulp concentration adjusting means includes beating concentration adjusting means for adjusting the beating concentration of the used paper pulp in the pulp making unit corresponding to the beating efficiency by the beating means, and paper making concentration adjusting means for adjusting the paper making concentration of the used paper pulp in the paper making unit corresponding to the finished paper quality of the recycled paper to be recycled, and therefore the concentration of the used paper pulp can be adjusted in two stages, and the concentration of the used paper pulp can be adjusted in two stages, and the concentration can be adjusted by effectively utilizing the limited working space of the used paper recycling apparatus of furniture size, and used paper recycling high in operation efficiency is realized.

That is, the used paper pulp adjusted to high concentration (beating concentration) by the beating concentration adjusting means is processed efficiently in the beating process by the beating means of relatively high concentration, and this used paper pulp is adjusted to a low concentration (paper making concentration) corresponding to the finished paper quality of the recycled paper by the paper making concentration adjusting means, and is set into the successive paper making section, so that a series of used paper recycling process can be efficiently carried out in a narrow working space.
(V) Since the pulp concentration adjusting means is of weight type for adjusting the concentration of the used paper pulp by measuring the weight for determining the mixing rate of used paper and water, the concentration can be adjusted flexibly if the used paper is charged irregularly.
(VI) The paper making concentration adjusting means includes division extracting means for extracting a division only for a specified small portion out of the whole volume of the used paper pulp manufactured in the pulp making section in the preceding process, and a specified amount of water for concentration adjustment is added to the specified small portion of the used paper pulp divided and extracted by the division extracting means, and the concentration of the used paper pulp is adjusted in small portions, not in batch, and therefore the water consumption is saved and the apparatus is reduced in size while the processing capacity is enhanced.
(VII) The used paper recycling apparatus employing such beating technique is compact in the apparatus structure, and can be installed not only in a large office, but also in a small shop or general household, and from this viewpoint, too, leak or disclosure of confidential information, personal information or other information can be prevented securely.

The other objects and features of the present invention will be understood and appreciated by reading the following detailed description along with the accompanying drawings, and novel facts indicated in the claims thereof.

### BRIEF DESCRIPTION OF THE DRAWINGS

Fig. 1 is a front sectional view showing an overall outline configuration of a used paper recycling apparatus in preferred embodiment 1 of the present invention.
Fig. 2 is a side sectional view of an overall outline configuration of the used paper recycling apparatus.
Fig. 3 is a magnified front view of a partial section of principal configuration of a beating unit of the used paper recycling apparatus.
Fig. 4 is a magnified front view of an internal configuration of a grinder as a principal component of the beating unit.
Fig. 5 is a perspective exploded view of principal parts of the grinder of the beating unit.
Fig. 6 is a circuit diagram of a configuration of used paper pulp circulation route of the beating unit.
Fig. 7 is a block diagram of a configuration of a pulp concentration adjusting unit of the used paper recycling apparatus.
Fig. 8 is a block diagram of control configuration of the used paper recycling apparatus.
Fig. 9 is a perspective view of outline configuration of the used paper recycling apparatus.
Fig. 10 is a circuit diagram of a configuration of used paper pulp circulation route of a beating unit in a used paper recycling apparatus in preferred embodiment 3 of the present invention.
Fig. 11 is a side sectional view of an overall outline configuration of a used paper recycling apparatus in preferred embodiment 4 of the present invention.

### DETAILED DESCRIPTION OF THE PREFERRED EMBODIMENTS

Preferred embodiments of the present invention are specifically described below while referring to the accompanying drawings. Throughout the drawings, same reference numerals refer to same components or elements.

### Preferred embodiment 1

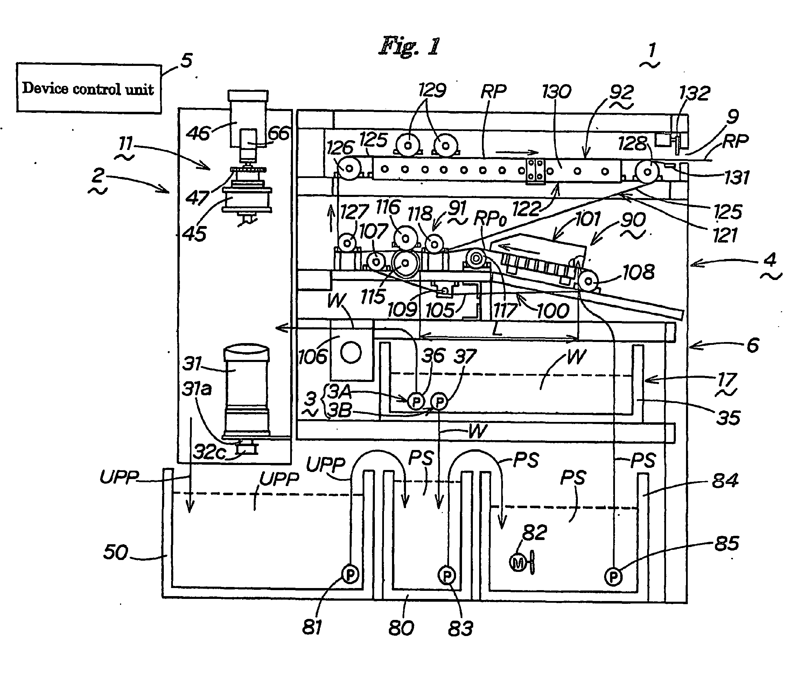

The used paper recycling apparatus of the present invention is shown in Fig. 1 to Fig. 9, in which a used paper recycling apparatus 1 is installed specifically at the site of occurrence of used paper, and is an apparatus for recycling the occurring used paper UP into re-usable paper at the site without disposing or discarding, and such used paper UP includes confidential documents occurring in government offices and private companies, and private letters in general household, and other used and unnecessary documents.

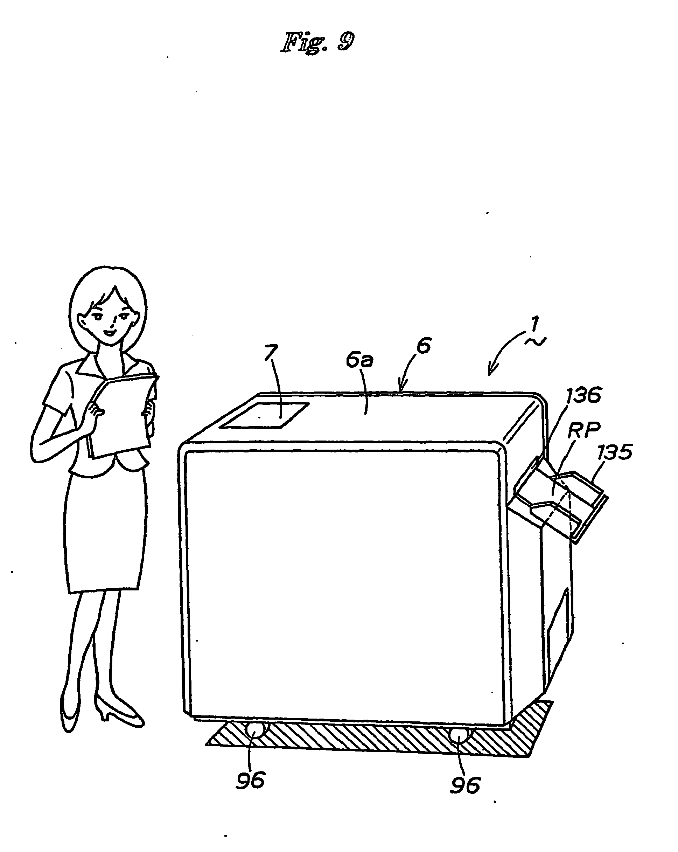

The used paper recycling apparatus 1 has a furniture size as shown in Fig. 9, that is, the size and shape similar to office equipment, such as document rack, locker, desk, copier, or personal computer, and mainly comprises a pulp making unit 2, a pulp concentration adjusting unit (pulp concentration adjusting means) 3, a paper making unit 4, and a device control unit 5 as shown in Fig. 1, and these device components 2 to 5 are accommodated and contained in an apparatus case 6 in a compact design.

The apparatus case 6 has a furniture size as mentioned above, and the specific dimensions and shape are designed properly depending on the purpose and application. The apparatus case 6 in the illustrated preferred embodiment is a cubic box having dimensions and shape like a copier used in an office, and the outer circumference is covered with a decorative case cover 6a. The bottom of the apparatus case 6 is provided with casters 96, 96, ... as moving means so as to be moved freely on the floor. In the ceiling of the apparatus case 6, a closable inlet 7 is provided for supplying used paper UP, and a recycled paper receiving tray 135 is provided detachably at the side for receiving recycled paper RP, RP, .... The recycled paper receiving tray 135 is oppositely provided with a discharge port 136 of the apparatus case 6, and the recycled paper RP, RP, ... discharged from the discharge port 136 are sequentially received in layers.

The pulp making unit (pulp making device) 2 is a process unit for fragmenting and beating the used paper UP for manufacturing used paper pulp, and mainly comprises a fragmenting unit 10 for agitating, crushing and fragmenting the used paper UP, and a beating unit 11 for beating the used paper UP fragmented in this fragmenting unit 10.

The fragmenting unit 10 is a process unit for agitating, crushing and fragmenting the used paper UP, and mainly comprises a fragmenting tank 15, an agitating device (agitating means) 16, and water feeding device (water feeding means) 17.

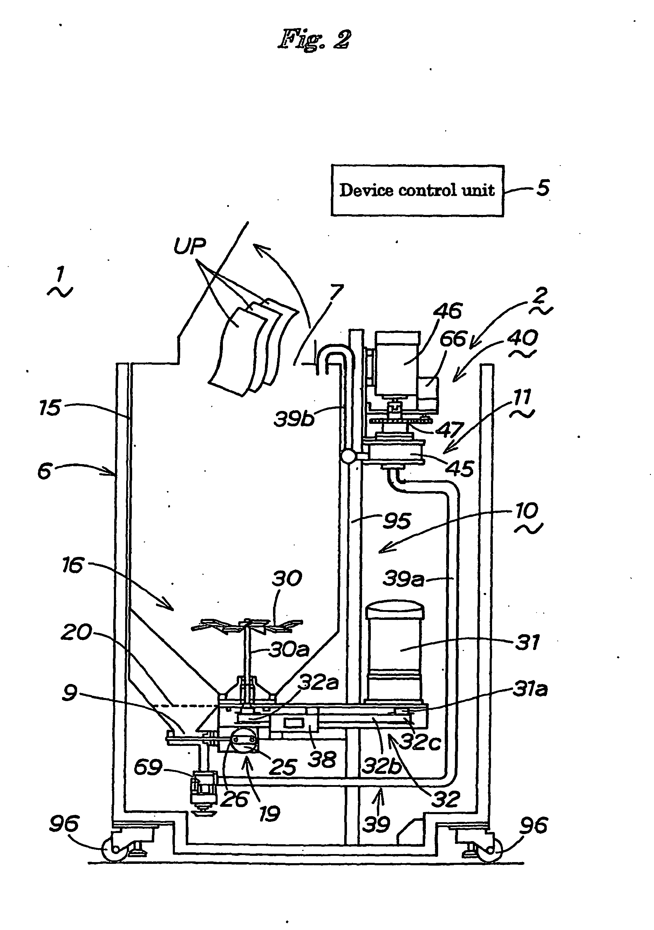

The fragmenting tank 15 is provided with the inlet (used paper inlet) 7 for feeding and supplying used paper UP in the ceiling wall as shown in Fig. 2, and a discharge port 9 for discharging the fragmented used paper pulp UPP to the downstream side is provided in the bottom wall. The inner volume of the fragmenting tank 15 is determined depending on the number of sheets of used paper UP to be agitated and processed in batch. In the shown preferred embodiment, about 98 liters of water is added, and the fragmenting tank 15 has a capacity of agitating and processing about 500 sheets (about 2000 g) of used paper UP of A4 format PPC (plain paper copier) (in batch process). At this time, the concentration of used paper pulp UPP to be fragmented is about 2%. This concentration is adjusted by feeding water from a water feeding device 17, and this water feeding device 17 forms a part of the pulp concentration adjusting unit (pulp concentration adjusting means) 3.

The inlet 7 has a structure can be opened and closed to outside of the case cover 6a of the apparatus case 6. The discharge port 9 can be opened and closed by an opening valve 19, and communicates with a used paper pulp circulation route 39 described below. At the position of the discharge port 9, a debris filter 20 is provided for removing paper clips, staples, wires and others used for binding used paper UP, UP, ... which may become troubles in the subsequent beating process.

The opening valve 19 is specifically opened and closed by the crank motion of a crank mechanism 26 by a drive motor 25. The drive motor 25 is specifically an electric motor, and the drive motor 25 is electrically connected to the device control unit 5.

The agitating device 16 is provided inside of the fragmenting tank 15, and is provided with an agitating impeller 30 and a drive motor 31.

The agitating impeller 30 has its rotation shaft 30a rotatably supported upright in the central position of the bottom of the fragmenting tank 15, and is provided so as to be free to rotate horizontally, and the lower end of the rotation shaft 30a is driven and coupled to a rotation shaft 31a of the drive motor 31 by way of transmission means 32 composed of a transmission pulley 32a, a transmission belt 32b, and a transmission pulley 32c.

By normal and reverse rotation of the agitating impeller 30, if the used paper UP is agitated directly in its original A4 format, by the water j et action of normal rotation and reverse rotation of the agitating impeller 30, the used paper UP is dispersed effectively, and entangling on the agitating impeller 30 can be effectively prevented.

The blade shape of the agitating impeller 30 is designed so as to be different in the agitating force (dispersion effect) in normal rotation and reverse rotation, and hence the used paper UP, UP, ... may be fragmented and beaten uniformly.

The operating conditions of the agitating impeller 30, such as changeover timing of normal rotation and reverse rotation, and the agitation time are determined on the basis of the preliminary experiment data so as to obtain desired fragmenting and beating effects of used paper UP, UP, ....

The water feeding device 17 is to supply water into the agitating tank 15, and composes a beating concentration adjusting unit (beating concentration adjusting means) 3A of the pulp concentration adjusting unit (pulp concentration adjusting means) 3 as described later.

The water feeding device 17 in the illustrated preferred embodiment includes, as shown in Fig. 1, a white water collecting tank 35, a water feeding pump 36 for adjusting the beating concentration, and a water feeding pump 37 for adjusting the paper making concentration. The white water collecting tank 35 is designed to, as described later, collect white water W filtered and dewatered in the paper making unit 4 (pulp water of very low concentration filtered by the paper making mesh in the paper making process), and the white water W collected in this white water collecting tank 35 is supplied into the fragmenting tank 15 from the water feeding pump 36, and into a concentration adjusting tank 80 described later from the water feeding pump 37.

In this relation, a weight sensor 38 is provided in the bottom of the fragmenting tank 15, and the amount of used paper UP, UP, ... and water to be processed in batch in the fragmenting tank 15 is measured and controlled, and the weight sensor 38 is electrically connected to the device control unit 5.

The weight sensor 38 of the illustrated preferred embodiment is a load cell, and is designed to detect and measure the total weight of the weight of the used paper UP, UP, ... and water supplied into the fragmenting tank 15.

In a specific control configuration of the fragmenting unit 10, first the worker opens the inlet 7, and used paper UP, UP, ... are charged into the fragmenting tank 15, and the weight is detected and measured by the weight sensor 38, and when reaching a specified amount (number of sheets), the worker is informed by sound and/or display. According to the display, the worker closes the inlet 7, and the water feeding device 17 is driven, and the water feeding pump 36 supplies the water W in the white water collecting tank 35 into the fragmenting tank 15 by the amount corresponding to the weight (number of sheets) of charged used paper UP, UP, ....

If the worker closes the inlet 7 after charging an arbitrary amount (an amount smaller than the specified mount (number of sheets)) of used paper UP, UP, ... into the fragmenting tank 15 from the inlet 7, the weight is sensed and measured by the weight sensor 38, and the water feeding device 17 is driven, and an amount of water W suited to the measured result is supplied into the fragmenting tank 15 from the white water collecting tank 35 by the water feeding pump 36.

In the illustrated preferred embodiment, as mentioned above, when the PPC used paper UP of A4 format of about 500 sheets (about 2000 g) is charged into the fragmenting tank 15, the worker is informed at this moment by sound and/or display, and when the inlet 7 is closed, about 98 liters of water is supplied into the water feeding device 17, or when the used paper UP, UP, ... is charge by an arbitrary amount (an amount smaller than the specified mount (number of sheets)), the water corresponding to this used paper charging amount is supplied from the water feeding device 17, and the concentration of the fragmented used paper pulp UPP is controlled and adjusted to about 2%.

In the agitating device 16, the used paper UP, UP,... charged into the fragmenting tank 15 from the opening or the inlet 7 of the apparatus case 6 are, by normal and reverse rotation of the agitating impeller 30 by the drive motor 31, agitated and mixed for a specified time (about 10 minutes to 20 minutes in the illustrated preferred embodiment) in the water supplied from the water feeding device 17, and thereby the used paper UP, UP, ... are fragmented and beaten, and transformed into used paper pulp UPP.

The discharge port 9 of the fragmenting tank 15 is closed by the opening valve 19 during normal operation of the fragmenting unit 10, and flow of used paper UP or.used paper pulp UPP from the fragmenting tank 15 into the used paper pulp circulation route 39 is blocked, and during operation of the beating unit 11 mentioned below, the discharge port 7 is opened by the opening valve 19, and flow of used paper pulp UPP from the fragmenting tank 15 into the used paper pulp circulation route 39 is permitted along with the circulatory flow.

The beating unit 11 is a process unit for beating the used paper UP fragmented in the fragmenting unit 10, and more specifically the used paper UP fragmented in the fragmenting unit 10 is pressurized and beaten, and inks forming characters and drawings on the used paper UP (including printing inks forming characters and drawings on the used paper UP various printing techniques, or inks forming characters and drawings on the used paper UP by pencil, ballpoint pen, fountain pen, other writing tools) are ground and pulverized (until micro-fibers). ..

The beating unit 11 has at least one beating means (one unit in the illustrated preferred embodiment) 40.

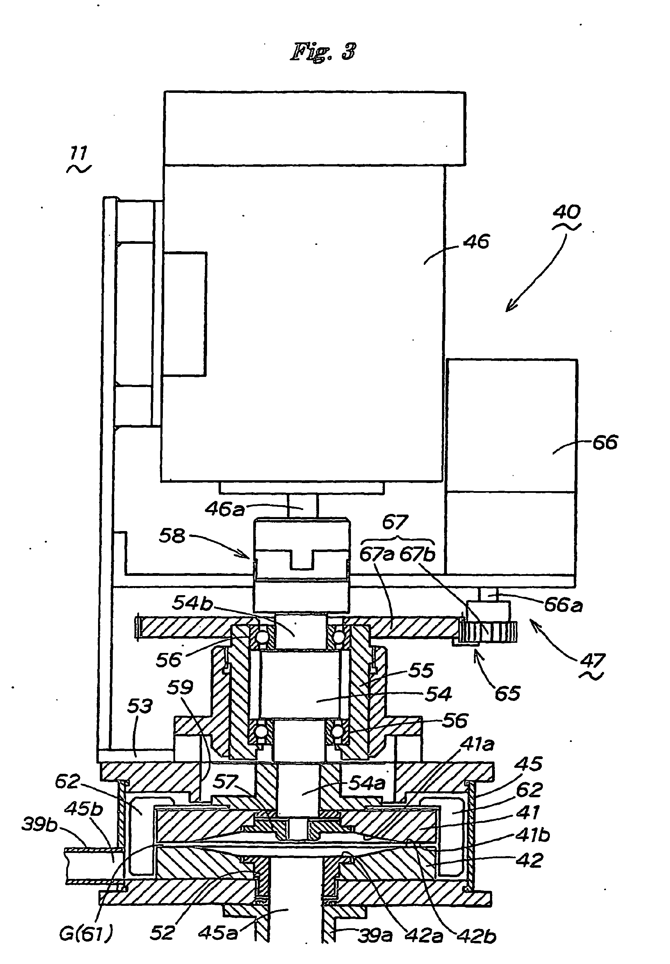

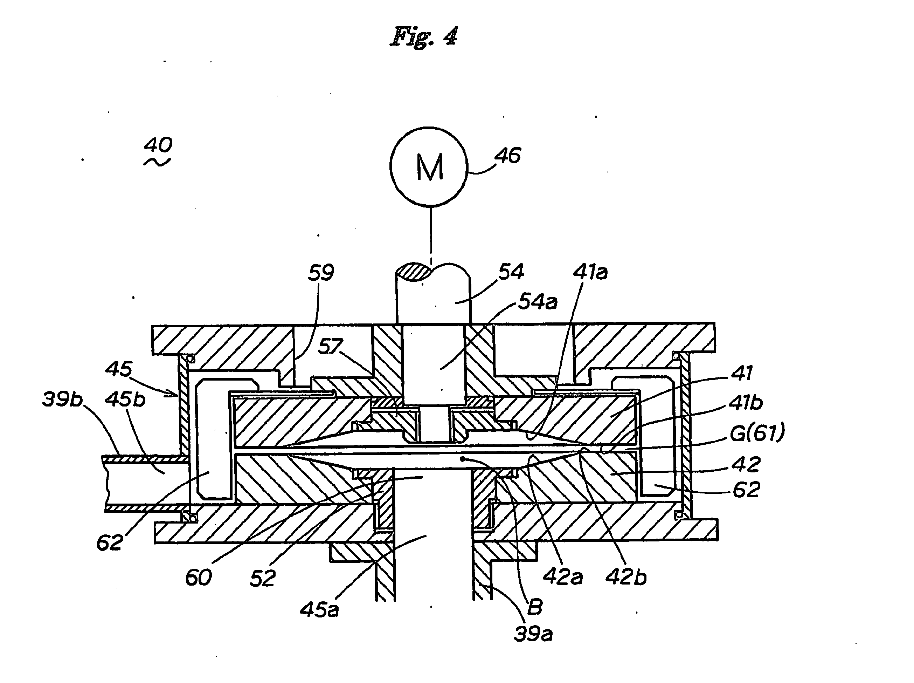

The beating means 40 is a grinder mainly having a pair of beating disks 41, 42 rotated and driven relatively as principal components as shown in Fig. 3 and Fig. 4, and the pair of beating disks 41, 42 have beating action surfaces 41a, 42a disposed oppositely and concentrically across a tiny beating gap G.

The beating gap G of the beating action surfaces 41a, 42a of the grinder (beating means) 40 is set to be narrower gradually from the beginning of the grinder 40 till the end of the grinder 40 in the beating process as described below.

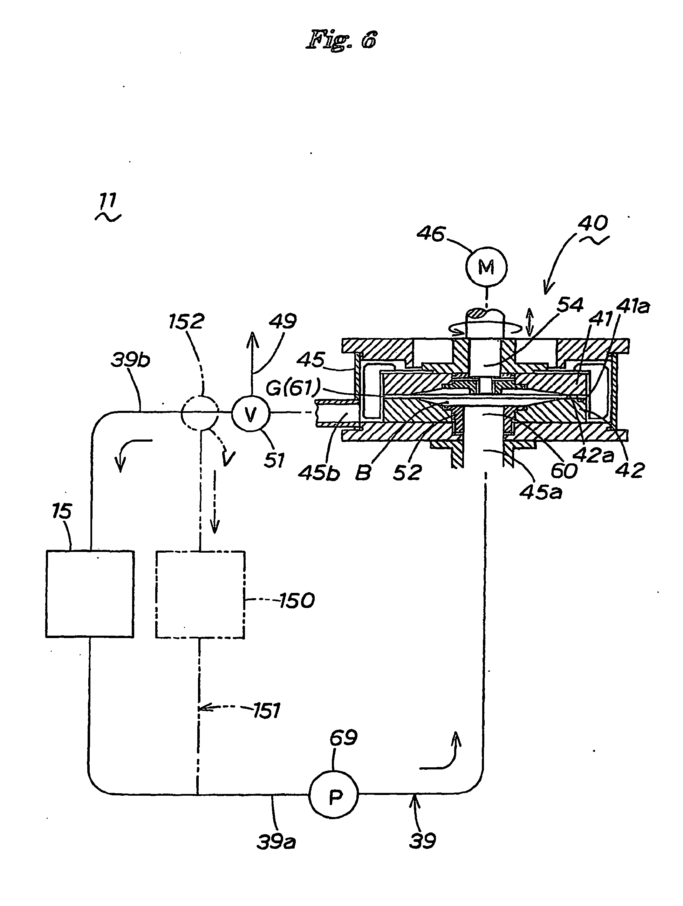

In the beating unit 11 of the present preferred embodiment, as shown in Fig. 6, the used paper pulp circulation route 39 having one grinder 40 is formed, and the used paper pulp UPP is beaten and processed as being circulated for a specified time by way of the grinder 40 in the circulation system.

By execution of the beating process by this used paper pulp circulation route 39, in spite of the small and limited process space in the apparatus case 6 of furniture size, the used paper pulp beating process route of an infinite length basically not limited in length can be formed, and it is capable of assuring a wide beating process space nearly equal to the beating process in a large apparatus, and an appropriate beating effect is obtained depending on the purpose.

Besides, since one grinder 40 beats and processes throughout the whole process of the beating process, this one grinder 40 plays the function of a plurality of grinders, from the grinder at the beginning till the grinder at the end of the beating process. Specifically, the beating gap G of the beating action surfaces 41a, 42a of the grinder 40 is controlled and adjusted to be narrower gradually from the beginning till the end of the beating process.

The grinder 40 in the illustrated preferred embodiment is provided on an apparatus machine body 95 for composing the apparatus case 6, adjacently to the fragmenting tank 15 of the fragmenting unit 10, and includes, as shown in Fig. 3, a beating tank 45 communicating with the fragmenting tank 15 of the fragmenting unit 10, a pair of beating disks 41, 42 provided in the beating tank 45 to be rotatable relatively, a rotation drive source 46 for relatively rotating and driving the pair of beating disks 41, 42, and gap adjusting means 47 for adjusting the beating gap G of the pair of beating disks 41, 42.

The beating tank 45 formed in a closed cylindrical shape so as contain the pair of beating disks 41, 42, and has a feed port 45a for supplying the used paper pulp UPP from the upstream side, and a discharge port 45b for discharging the beaten used paper pulp UPP to the downstream side.

More specifically, the feed port 45a is opened in the center of the bottom of the beating tank 45 toward the vertical direction, and the discharge port 45b is opened at the cylindrical side of the beating tank 45 toward the horizontal direction. The feed port 45a and the discharge port 45b communicate with the fragmenting tank 15 of the fragmenting unit 10 as shown in Fig. 2 and Fig. 6 by way of circulation piping 39a, 39b respectively, and the discharge port 45b further communicates with a used paper pulp collection tank 50 by way of a discharge piping 49.

Reference numeral 51 is a direction changeover valve, and by the changeover action of this direction changeover valve 51, the used paper pulp UPP discharged from the discharge port 45b is selectively refluxed into the fragmenting tank15, or collected in the used paper pulp collection tank 50. The direction changeover valve 51 is specifically an electromagnetic opening valve, and is electrically connected to the device control unit 5.

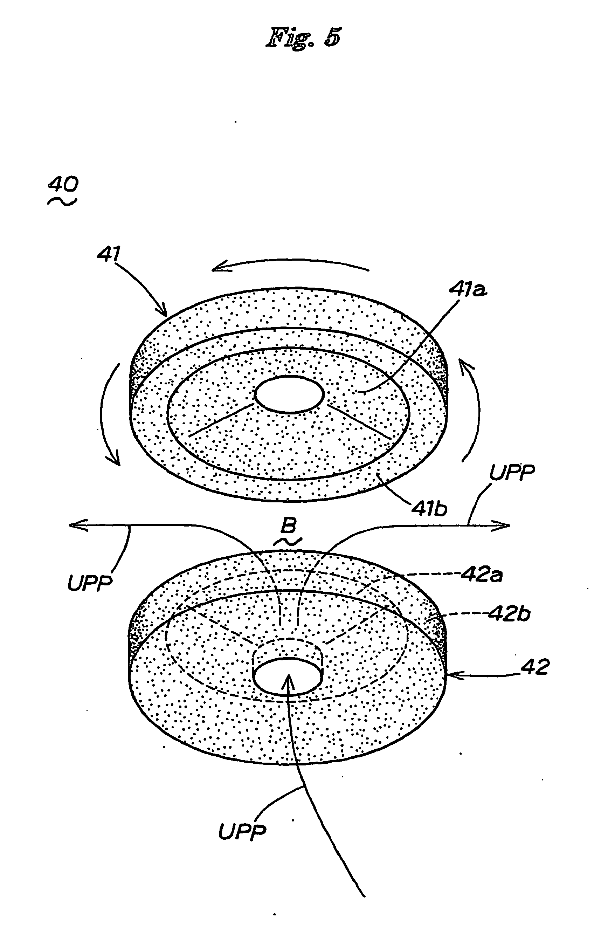

The pair of beating disks 41, 42 consist of one fixed beating disk fixed in the rotating direction, and other rotatable beating disk, and in the illustrated preferred embodiment, as shown in Fig. 5, the upper beating disk 41 is the rotatable side, and the lower beating disk 42 is the fixed side.

The lower fixed side beating disk 42 is fixed to the inner side of the bottom of the beating tank 45 by means of a screw-type hollow fixing member 52, and the upper rotary side beating disk 41 is disposed oppositely to this fixed side beating disk 42, concentrically and rotatably relatively across a tiny beating gap G.

This rotary side beating disk 41 is driven and coupled by a drive motor 46 by way of a rotation spindle 54 supported on an apparatus base 53 mounted and fixed on an apparatus machine body 95 rotatably and movably in the axial direction.

The rotation spindle 54 is supported on an elevating member 55 of the gap adjusting means 47 described later, rotatably by bearings 56, 56, and the rotary side beating disk 41 is formed at its leading end portion 54a concentrically and integrally by means of a mounting nut member 57, and its base end portion 54b driven and coupled to a rotation shaft 46a of the drive motor 46 by means of a shaft coupling 58, integrally in the rotating direction and movably in the axial direction relatively.

The drive motor 46 is a rotation drive source, which rotates and moves the pair of beating disks 41, 42 relatively, and it is specifically an electric motor, and this drive motor 46 is electrically connected to the device control unit 5.

The leading end portion 54a of the rotation spindle 54 is opposite to the inside of the beating tank 45 by way of an opening 59 in the center of the ceiling of the beating tank 45, and the interval of the opening 59 and the rotation spindle 54 is not sealed, and the inside and the outside of the beating tank 45 communicate with each other, and the seal structure is simplified. The sealing performance of this location is assured by controlling and adjusting the volume of the used paper pulp UPP so that the discharge amount from the discharge port 45b may be larger than the supply amount from the feed port 45a.

The opposite sides 41a, 42a of the both beating disks 41, 42 having the tiny beating gap G cooperate to form the beating action surfaces. These opposite beating action surfaces 41a, 42a formed as grinding surfaces having multiple abrasive grains bonded by a bonding material, and the both beating action surfaces 41a, 42a are formed in a taper shape, as shown in Fig. 4 and Fig. 5, so that the diameter dimensions may be larger continuously in the mutually opposite directions, and annular flat surfaces 41b, 42b are formed so that the outermost peripheral edges may be parallel to each other, and these annular flat surfaces 41b, 42b are forming the beating gap G.

In other words, in the pair of beating disks 41, 42, in the central position of the beating action surface 42a of the fixed side beating disk 42, an inlet 60 communicating concentrically with the feed port 45a of the beating tank is formed, and two annular flat surfaces 41b, 42b formed on the outer peripheral edge of the beating action surfaces 41a, 42b of the pair of beating disks 41, 42 communicate with the discharge port 45b of the beating tank 45, and form an outlet 61 having the beating gap G.

On the outer circumference of the rotary side beating disk 41, a plurality of blades 62, 62, ... are provided at specified intervals in the circumferential direction, and these blades 62, 62, ... have pump actions for extruding the used paper pulp UPP discharged from the outlet 61 toward the discharge port 45b of the beating tank 45 by the centrifugal force by rotation of the rotary side beating disk 41.

By the drive motor 46 of the drive source, the rotary side beating disk 41 is rotated and driven oppositely to the fixed side beating disk 42, and the used paper pulp UPP supplied from the fragmenting tank 15 of the fragmenting unit 10 into the beating space B by way of the feed port 45a of the beating tank 45 and the inlet 60 flows from the inlet 60 into the beating space B, and passes through the beating space B, and receives the pressurizing and the beating action by the relatively rotating beating action surfaces 41a, 42a, and the ink particles forming the characters and drawings on the used paper UP are pulverized and destroyed, and the used paper pulp UPP is discharged from the outlet 61 by way of the discharge port 45b of the beating tank 45.

When being discharged from the outlet 61, the used paper pulp UPP further receives the pressurizing and the beating action at the position of the outlet 61 having the beating gap G, and is pulverized to specified micron size (to become micro fibers) by the beating gap G.

In this regard, in the present preferred embodiment, as mentioned above, one grinder 40 is installed in the used paper pulp circulation route 39 in the circulatory beating process (see Fig. 6), and one grinder 40 functions as a plurality of grinders, from the grinder at the beginning the grinder at the end of the beating process, and the beating gap G of the grinder 40 is controlled and adjusted by gap adjusting means 47 to be narrower gradually from the beginning till the end of the beating process.

The gap adjusting means 47 is specifically shown in Fig. 3, in which the pair of beating disks 41, 42 are relatively moved in the direction of axis of rotation, and the beating gap G of these beating disks 41, 42 is controlled and adjusted, and it mainly comprises moving means 65 for moving the rotary side beating disk 41 in the direction of the axis of rotation, that is, in the axial direction of the rotation spindle 54, and a drive source 66 for driving this moving means 65.

The moving means 65 has the elevating member 55 mentioned above and a rotary mechanism 67 for rotating and moving this elevating member 55. The elevating member 55 is nearly cylindrical, and is supported, as shown in Fig. 3, on an apparatus base 53 so as to be movable back and forth concentrically and vertically on the pair of beating disks 41, 42, and the rotation spindle 54 is rotatably supported in the inside by way of the bearings 56, 56. At the upper end of the elevating member 55, a gear 67a of a rotary mechanism 67 is provided integrally, and a pinion 67b to be engaged with the gear 67a is mounted and fixed on a rotation shaft 66a of the drive motor 66 as the drive source.

The drive motor 66 is specifically an electrical motor, and this drive motor 66 is electrically connected to the device control unit 5.

By rotation of this drive motor 66, the elevating member 55 ascends and descends together with the rotation spindle 54 on the apparatus base 53 by way of the rotary mechanism 67, and the rotary side beating disk 41 integral with the rotation spindle 54 moves in the vertical direction to the fixed side beating disk 42, that is, in the direction of the axis of rotation, and thereby the beating gap G of the both beating disks 41, 42 is controlled and adjusted.

For this purpose, a position detection sensor (not shown) is provided for detecting the elevating position of the rotary side beating disk 41, and depending on the detection result of the position detection sensor, the drive motor 66 is driven and controlled. The position detection sensor may be realized by an encoder for detecting the number of revolutions of the drive motor 66, a proximity sensor for detecting the rotating position of the gear 67a or the pinion 67b of the rotary mechanism 67, or a proximity sensor for detecting directly the elevating position of the rotary side beating disk 41, and in the shown preferred embodiment, a proximity sensor for detecting the rotating position of the gear 67a of the rotary mechanism 67 is used. This position detection sensor is electrically connected to the device control unit 5.

The beating gap G of the beating disks 41, 42 is controlled and adjusted by the gap adjusting means 47 as shown in Fig. 6, in mutual cooperation with the circulation pump 69 as circulating means in the circulatory beating process in the used paper pulp circulation route 39.

That is, as shown in Fig. 6, the used paper pulp circulation route 39 comprises circulation piping 39a and 39b, being formed in an annular loop by way of the fragmenting tank 15 of the fragmenting unit 10, the circulation pump 69, and one grinder 40, and at an intermediate point of the circulation piping 39b, a discharge piping 49 is branched and connected to communicate with the used paper pulp collecting tank 50 by way of the direction changeover valve 51.

The used paper pulp UPP fragmented and processed by the fragmenting unit 10 is circulated in the used paper pulp circulation route 39 by means of the circulation pump 69, and the beating process is executed by the grinder 40, and the beating gap G of the beating action surfaces 41a, 42a of the grinder 40 is adjusted at this time by the gap adjusting means 47 so as to be narrower gradually from the beginning till the end of the beating process.

By the gap adjusting means 47, the beating gap G of the grinder 40 is controlled and adjusted in the following methods: (i) the beating gap G of the grinder 40 is controlled to be narrower gradually from the beginning till the end of the beating process, and (ii) the beating gap G of the grinder 40 is controlled to be narrower continuously from the beginning till the end of the beating process, and others, and the former method is employed in the illustrated preferred embodiment.

The timing and magnitude of gradual narrowing of the beating gap G of the grinder 40 may be determined appropriately so that the beaten used paper pulp UPP may not be clogged in the beating gap G according to the conditions obtained by tests in consideration of the relation of the concentration of the used paper pulp UPP and the circulation flow rate and time of the used paper pulp UPP by the circulation pump 69.

In this illustrated preferred embodiment, the conditions are set as follows.
(a) Concentration of used paper pulp UPP being beaten: about 2%
(b) Size of beating gap G of the grinder 40: 4 stages at the following timing.

First stage: the beating gap G is 1 mm, being circulated for 5 minutes.

Second stage: the beating gap G is 0.4 mm, being circulated for 25 minutes.

Third stage: the beating gap G is 0.12 mm, being circulated for 45 minutes.

Fourth stage: the beating gap G is 0.05 mm, and the beaten pulp is discharged and collected in the used paper pulp collecting tank 50.

The fragmenting tank 15 of the fragmenting unit 10 is included in the used paper pulp circulation route 39, and therefore in the beating process, the agitating device 16 of the fragmenting unit 10 is driven and controlled, and the fragmenting unit 10 is driven simultaneously with the beating unit 11.

In other words, in the circulatory beating process, while the used paper pulp UPP flows out from the fragmenting tank 15 into the used paper pulp circulation route 39, the used paper pulp UPP beaten by the grinder 40 flows into the fragmenting tank 15, and therefore in the fragmenting tank 15, components of used paper pulp UPP different in the degree of beating coexist, and by the agitating action of the agitating device 16, the degree of beating of the used paper pulp UPP in the fragmenting tank 15 becomes more uniform, so that the beating process is promoted.

The used paper pulp collecting tank 50 is a location for collecting the used paper pulp UPP beaten and pulverized to desired size by the beating unit 11, and the used paper pulp UPP collected in this location is sent into a pulp concentration adjusting unit (pulp concentration adjusting means) 3, before being sent into the paper making unit 4 of next paper making process, and is mixed and adjusted to a paper making concentration corresponding to the finished paper quality of the recycled paper RP to be recycled, and a pulp suspension PS is prepared.

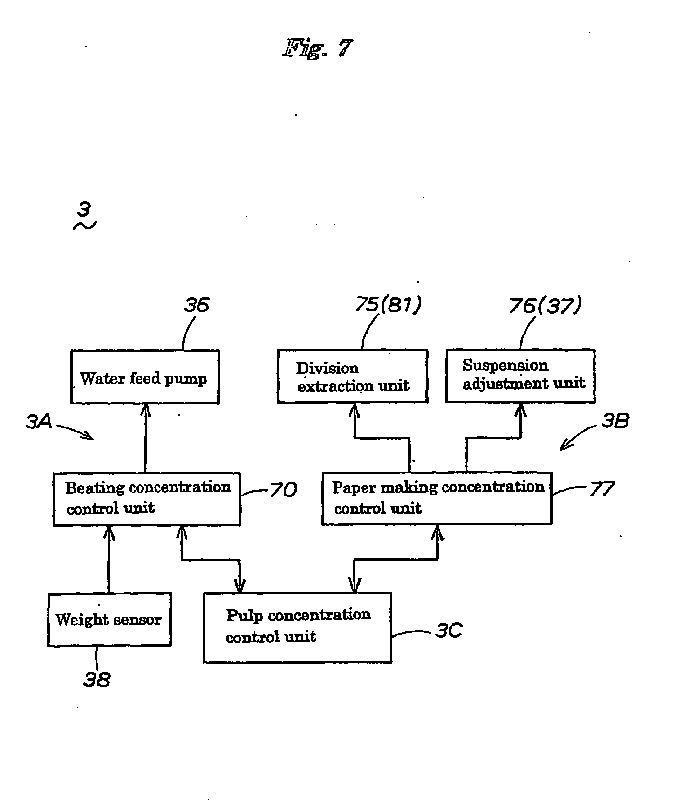

The pulp concentration adjusting unit 3 is weight type means for adjusting the mixing rate of used paper UP and water W supplied into the apparatus by measuring the weight, and adjusting the concentration of the used paper pulp UPP supplied in the paper making unit 4, and specifically as shown in Fig. 7, it includes a beating concentration adjusting unit (beating concentration adjusting means) 3A, paper making concentration adjusting unit (paper making concentration adjusting means) 3B, and pulp concentration control unit (pulp concentration control means) 3C.

The beating concentration adjusting unit 3A is for adjusting the beating concentration of the used paper pulp UPP in the pulp making unit 2, corresponding to the beating efficiency of the beating unit 11, and mainly comprises, as mentioned above, a water feed pump 36 for adjusting the beating concentration of the water feeding device 17, and a beating concentration control unit 70.

The supply amount of white water W by the water feed pump 36 of the beating concentration adjusting unit 3A is preferably determined so that the beating concentration of the used paper pulp UPP fragmented and beaten by the agitating device 16 may be, for example, the maximum concentration allowed for the beating capacity of the grinder 40 of the beating unit 11 for executing the next process of beating process, and in the illustrated preferred embodiment, as mentioned above, it is set to be beating concentration of about 2%.

The beating concentration control unit 70 drives and controls the water feed pump 36 so as to supply a necessary amount of water into the fragmenting tank 15 depending on the measured result from the weight sensor 38. The beating concentration control unit 70 forms a part of the device control unit 5 as described below.

The paper making concentration adjusting unit 3B is for adjusting the paper making concentration of the used paper pulp UPP in the paper making unit 4 to an appropriate concentration corresponding to the finished paper quality of the recycled paper RP to be recycled, and is specifically designed to adjust the concentration of used paper pulp UPP manufactured in the pulp making unit 2 by division system, and manly comprises division extracting unit (division extracting means) 75, suspension preparing unit (suspension preparing means) 76, and paper making concentration control unit (paper making concentration control means) 77.

The division extracting unit 75 is designed to divide and extract only a specified small portion from the whole volume of the used paper pulp UPP manufactured in the preceding process of the pulp making unit 2, and mainly includes a used paper pulp feed pump 81 for division and extraction for extracting the used paper pulp UPP in the used paper pulp collecting tank 50, and sending into a concentration adjusting tank 80.

The suspension preparing unit 76 is for preparing a pulp suspension of a specified concentration by adding a specified amount of water for adjusting the concentration to the specified small portion of used paper pulp divided and extracted by the division extracting unit 75, and mainly includes a water feed pump 37 of the water feeding device 17.

Although not shown specifically, in the bottom of the concentration adjusting tank 80, a weight sensor of load cell is provided same as in the fragmenting tank 15 mentioned above, and the weight of the used paper pulp UPP supplied in the concentration adjusting tank 80 and the water for concentration adjustment is measured, and the weight sensor is electrically connected to the device control unit 5.

The paper making concentration control unit 77 is for controlling by cooperating with the division extracting unit 75 and the suspension preparing unit 76, and forms a part of the device control unit 5, and in order to execute the paper making concentration adjusting process, the pumps 81, 37 of the division extracting unit 75 and the suspension preparing unit 76 are controlled in cooperation.

That is, from the whole volume of used paper pulp UPP collected in the used paper pulp collecting tank 50 from the beating unit 11 (in the illustrated preferred embodiment, about 2000 g of used paper UP + 100 liters of water W), a specified portion (1 liter in the illustrated preferred embodiment) of used paper pulp UPP is divided by the used paper pulp feed pump 81, and is transferred and contained in the concentration adjusting tank 80. As a result, its weight is detected and measured by the weight sensor, and the result is sent into the device control unit 5.

In succession, corresponding to the divided specified portion of the used paper pulp UPP, by the water feed pump 37, a specified amount of diluting water W (in the shown illustrated preferred embodiment, 9 liters; actually as measured by the weight sensor) is supplied into the concentration adjusting tank 80 from the white water collecting tank 35.

Hence, in the concentration adjusting tank 80, the used paper pulp UPP of beating concentration (2% in the illustrated preferred embodiment) is mixed with water W and diluted, and pulp suspension PS of specified concentration (about 0.2% concentration in the illustrated preferred embodiment, that is, target concentration) is mixed and prepared.

The target concentration of the pulp suspension PS prepared in this manner is determined in consideration of the paper making capacity in the paper making unit 4 described below, on the basis of the results of preliminary experiments, and in the case of the illustrated preferred embodiment, it is set at concentration of about 0.2 % as mentioned above.

The pulp suspension PS thus prepared to a paper making concentration of target concentration (0.2%) in the concentration adjusting tank 80 is transferred and supplied into the pulp feed tank 84 from the concentration adjusting tank 80 by means of a first suspension feed pump 83, and is stored temporarily for use in the next process of the paper making unit 4. Hereinafter, this paper making concentration adjusting process is executed repeated similarly on the whole volume of the used paper pulp UPP in the used paper pulp collecting tank 50. The pulp feed tank 84 is provided with a second suspension feed pump 85 for sending the pulp suspension PS into a paper making process unit 90 of the paper making unit 4.

An agitating device 82 is provided in the pulp feed tank 84, and by the agitating action of this agitating device 82, the whole paper making concentration of the stored pulp suspension PS is kept uniformly at a specific value.

In this way, by the paper making concentration adjusting unit 3, the concentration is adjusted not only in batch, but also in small divided portions, and the water consumption is saved substantially, and the shape and the size of the concentration adjusting tank 80 can be reduced substantially, and the used paper recycling apparatus 1 can be entirely contained in a compact size.

The pulp concentration control unit 3C is designed to drive and control the beating concentration adjusting unit 3A and the paper making concentration adjusting unit 3B in cooperation, and specifically receives the pulp concentration control information (the charged amount of the used paper UP, water feed volume into the fragmenting tank 15, the beating concentration of the used paper pulp UPP, etc.) from the beating concentration control unit 70 of the beating concentration adjusting unit 3A, and, depending on this control information, transmits the paper making concentration control information (the target paper making concentration of the used paper pulp UPP, the division extraction amount of the used paper pulp UPP from the used paper pulp collecting tank 50, the water feed amount into the concentration adjusting tank 80, etc.) for adjusting the concentration of the used paper pulp UPP manufactured in the pulp making unit 2 to the target value (the paper making concentration) to the paper making concentration control unit 77 of the paper making concentration adjusting unit 3B, thereby executing the paper making concentration adjusting process as mentioned above.

The paper making unit 4 is a process location for manufacturing recycled paper RP from the used paper pulp UPP manufactured in the pulp making unit 2, and mainly includes a paper making process unit 90, a dewatering roll unit 91, and a drying process unit 92.

The paper making process unit 90 is a location for producing moist paper from slurry of pulp suspension PS mixing both water W and used paper pulp UPP sent from the pulp feed tank 84 of the pulp making unit 2, and mainly includes a paper making conveyor 100 and a pulp feed unit 101.

The paper making conveyor 100 conveys while making the pulp suspension, and has a mesh belt 105 of paper making mesh structure composed of innumerable meshes for filtering and dewatering the pulp suspension PS, disposed in a structure running straightly toward its running direction.

More specifically, the paper making conveyor 100 is mainly composed of the mesh belt 105 formed in an endless belt structure for making and conveying the pulp suspension PS, and a drive motor 106 for moving and driving this mesh belt 105.

The plate material of paper making mesh structure for composing the mesh belt 105 is a material for filtering and dewatering the pulp suspension PS appropriately by innumerable meshes of the paper making mesh structure, and is preferably made of polypropylene (PP), polyethylene terephthalate (PET), polyamide (PA) (generally called Nylon, a registered trademark), stainless steel (SUS), and other materials excellent in corrosion resistance, and in the illustrated preferred embodiment, a PET mesh belt 105 excellent in heat resistance is used.

The mesh belt 105 is rotatably supported and suspended by way of a drive roller 107, a drive roller 108, a support roller 109, a dewatering roll 115, and a preliminary dewatering roll 117 as shown in Fig. 1, and is driven and coupled to the drive motor 106 by way of the drive roller 107.

The paper making process length L in the mesh belt 105 is set in a range of linear running direction length (in the illustrated case, the lateral direction length in Fig. 1) of the mesh belt 105 in the apparatus case 6 of furniture size.

The running speed of the mesh belt 105 is set in consideration of various conditions in the paper making process, and is preferably set at 0.1 m/min to 1 m/min, and in the illustrated preferred embodiment, it is set at 0.2 m/min. Incidentally, in the conventional large-scale used paper recycling plant, the running speed of the paper making belt of this kind is set at least higher than 100 m/min, and far higher than 1000 m/min in a rapid system.

The mesh belt 105, as shown in Fig. 1, is disposed and composed to run upward obliquely and linearly toward its running direction, and is extended as far as possible in the paper making process length L in a limited space of installation, and is enhanced in the filtering and dewatering efficiency in relation to the paper making mesh structure of the mesh belt 105.

The drive motor 106 for moving and driving the mesh belt 105 is specifically an electric motor, and is electrically connected to the device control unit 5. The drive motor 106 is shared as the running and driving source of the dewatering roll unit 91 and the drying process unit 92 mentioned below.

The pulp feed unit 101 is a location for supplying the pulp suspension PS from the pulp making unit 2 on the mesh belt 105, and by this pulp feed unit 101, the pulp suspension PS is spread and supplied uniformly on the upper surface of the mesh belt 105. The paper making process unit 90 is provided at a start end position of the paper making process of the paper making conveyor 100.

A specific structure of the pulp feed unit 101 is not shown, but, for example, has a basic structure as disclosed in Japanese Patent Application Laid-Open No. 2007-308837.

The pulp suspension PS supplied into the pulp feed unit 101 from the pulp feed tank 84 by the second suspension feed pump 85 is stored temporarily by a specified amount in this pulp feed unit 101, and is diffused uniformly on the top of the mesh belt 105 by its staying action. The pulp suspension PS diffused uniformly on the top of the mesh belt 105 is conveyed together with the mesh belt 105 by the running action of the mesh belt 105 in the arrow direction, and is filtered by gravity by the mesh cells of the mesh belt 105, and is dewatered, and moist paper RP₀ is obtained.

The white water W filtered and dewatered by the mesh belt 105 (the pulp water of extremely low concentration filtered by the paper making mesh in the paper making process) is collected in the white water collecting tank 35 of the water feeding device 17 as mentioned above.

The dewatering roll unit 91 is a location for squeezing and dewatering the moist paper RP₀ on the mesh belt 105 at the linkage point of the paper making process unit 90 and the drying process unit 92 mentioned below.

Specifically, a smooth surface belt 125 of the drying process unit 92 at the downstream side described below, and the mesh belt 105 of the paper making process unit 90 at the upstream side disposed in upper and lower layers as shown in Fig. 1, and the upper and lower adjacent portions of the smooth surface belt 125 and the mesh belt 105 are formed as linkage point, and the dewatering roll unit 91 is pressed and rolled from the upper and lower sides of the mesh belt 105 and the smooth surface belt 125.

A specific structure of the dewatering roll unit 91 is not shown, but has a basic structure as disclosed in Japanese Patent Application Laid-Open No. 2007-308837. That is, the dewatering roll unit 91 mainly includes a dewatering roll 115, a press roll 116, and a drive motor 106, and also includes assisting parts, that is, a preliminary dewatering roll 117, and a slurry preventive roll 118.

The dewatering roll 115 is to roll and press on the mesh belt 105 from the lower side, and is composed of, although not shown specifically, a cylindrical roll of material of high rigidity, and a dewatering layer of porous material having fine and continuous pores wound around on its outer circumference.

The press roll 116 is to roll and press the smooth surface belt 125 of the drying process unit 92 described later from the upper side, and specifically a cylindrical roll of material of high rigidity is used. In the shown preferred embodiment, the press roll 116 is a stainless steel cylindrical roll.

The dewatering roll 115 and the press roll 116 are specifically driven and coupled by one same drive motor 106, and the both rolls 115, 116 are rotated and driven in cooperation. In this case, the rolls 115, 116 are rotated and driven so that the outer circumferences of both rolls 115, 116 may roll and contact with each other by a very small mutual difference in rotating speed, on the contacting surfaces of the mesh belt 105 and the smooth surface belt 125 (the lower side of the mesh belt 105 and the upper side of the smooth surface belt 125) being pressed, rolled and squeezed between the mutual outer circumferences.

More specifically, the rotating speed of the press roll 116 is set slightly larger than the rotating speed of the dewatering roll 115, and hence the running speed of the smooth surface belt 125 is set larger than the running speed of the mesh belt 105. In such configuration, as mentioned below, the moist paper RP₀ squeezed and dewatered by the dewatering roll unit 91 is rolled and transferred to the lower side of the smooth surface belt 125 a the upper side from the upper side of the mesh belt 105 of the lower side, and at this time a tension is applied to the moist paper RP₀, and therefore creasing of the moist paper RP0 is effectively prevented.

The drive motor 106, in the illustrated preferred embodiment, is common with the drive motor of the paper making process unit 90 as mentioned below.

By driving of the drive motor 106, the both rolls 115, 116 roll and squeeze in pressurized state from upper and lower sides of the both belts 105, 125, and the moisture contained in the moist paper RP₀ on the mesh belt 105 is absorbed and removed by the dewatering roll 115 by way of the mesh belt 105. The squeezed and removed white water W is collected in the white water collecting tank 35 in the water feeding device 17.

The preliminary dewatering roll 117 and the slurry preventive roll 118 are provided for assisting the squeezing and dewatering actions of the press roll 116 and the dewatering roll 115 in the dewatering roll unit 91.

The preliminary dewatering roll 117 is disposed at a position for applying a tension by rolling on the mesh belt 105 from the lower side, at the upstream side of the dewatering roll unit 91.

The preliminary dewatering roll 117 is not specifically shown in specific structure, but is similar to the dewatering roll 115, and is composed of a cylindrical roll of material of high rigidity, and a dewatering layer made of porous material of fine continuous pores wound around on its outer circumference.

The moist paper RP₀ uniformly disposed on the top of the mesh belt 105 and conveyed together with the mesh belt 105 is filtered and dewatered by the mesh belt 105, and the moisture is also absorbed and removed by the preliminary dewatering roll 117 at the same time, and the squeezing and dewatering action by the press roll 116 and the dewatering roll 115 is preliminarily assisted.

The slurry preventive roll 118 is disposed, as shown in Fig. 1, at a nearby position at the upstream side of the dewatering roll unit 91, so as to roll and press the smooth surface belt 125 from the upper side, and press the smooth surface belt 125 to the moist paper RP₀ on the mesh belt 105 at the lower side.

The moist paper RP₀ squeeze and dewatered by the dewatering roll unit 91 is sent to a downstream side position of the dewatering roll unit 91, and is rolled and transferred to the lower side of the smooth surface belt 125 at the lower side from the upper side of the mesh belt 105 at the lower side, and is conveyed together with the smooth surface belt 125, and sent the drying process by the drying process unit 92.

This transfer action is considered to be produced from the smooth surface structure of the smooth surface belt 125. That is, the surface of the mesh belt 105 at the lower side has a fine concave and convex surface with multiple openings of fine continuous pores, while the surface of the smooth surface belt 125 at the upper side is a smooth surface free from pores, and hence it is considered that the moist paper RP₀ slightly containing moisture is estimated to be adsorbed by the surface tension against the surface of the smooth surface belt 125.

The drying process unit 92 is a location for drying the moist paper RP0 squeezed and dewatered by the dewatering roll unit 91 after the paper making process in the paper making process unit 90, and producing recycled paper RP, and mainly comprises a drying conveyor 121 and a heating and drying unit 122.

The drying conveyor 121 is designed to convey the moist paper RP₀ squeezed and dewatered in the dewatering roll unit 91 while smoothing, and includes the smooth surface belt 125 and the drive motor 106 for moving and driving the smooth surface belt 125.

The smooth surface belt 125 is designed to convey the moist paper RP₀ while heating and drying, and is specifically an endless belt connected and formed in an annular shape of a specified length by plate members of smooth surface structure having a specified width. The plate members of smooth surface structure are capable of finishing one side of the moist paper RP₀ to a proper smooth surface, and are made of a material capable of withstanding the heating action by the heating and drying unit 122 described below, and preferably elastic heat-resistant materials such as fluororesin and stainless steel are used, a fluororesin belt is used in the shown preferred embodiment.

The smooth surface belt 125 is rotatably suspended and supported, as shown in Fig. 1, by way of a drive roller 126, driven rollers 127, 128, a press roll 116, a slurry preventive roll 118, smooth finishing rolls 129, 129, and preliminary dewatering roll 117, and is driven by and coupled to the drive motor 106 by way of the drive roller 126.

The drive motor 106 for moving and driving the smooth surface belt 125 is, as mentioned above, also used commonly with the moving and driving source of the paper making conveyor 100 and the dewatering roll 91.

The heating and drying unit 122 is a location for heating and drying the moist paper RP₀ on the smooth surface belt 125, and has a heater plate 130 as a heating unit disposed on the way of the running route of the smooth surface belt 125.

The heater plate 130 in the shown preferred embodiment is disposed in a horizontal running section in the running route of the smooth surface belt 125, and is specifically disposed to heat and dry the moist paper RP₀ on the smooth surface belt 125 indirectly by way of the smooth surface belt 125.

In the running path of the smooth surface belt 125, the two smooth finishing rolls 129, 129 are disposed, and the moist paper RP₀ on the smooth surface belt 125 is sequentially rolled and pressed, and the one side and the opposite surface of the moist paper RP₀ contacting with the surface of the smooth surface belt 125 are finished to a proper smooth surface.

At the downstream side of the heating and drying unit 122 of the smooth surface belt 125, a stripping member 131 is disposed, and it is specifically a heat resistant flexible spatula, and the dried paper heated and carried on the smooth surface belt 125, that is, the recycled paper RP is sequentially peeled off from the holding surface of the smooth surface belt 125.

In this relation, at the terminal end position of the running route of the smooth surface belt 125 at the downstream side of the stripping member 131, a fixed size cutter 132 is provided, and the recycled paper RP separated from the smooth surface belt 125 is cut to a specified shape by this fixed size cutter 132 (in the shown preferred embodiment, a format of A4 size), and the recycled paper RP of re-usable size is obtained, and discharge from a discharge port 136 of the apparatus case 6.

The device control unit 5 is designed to automatically control the operations of the drive units by interlocking mutually, such as the pulp making unit 2, the pulp concentration adjusting unit 3, and the paper making unit 4, and is specifically composed of a microcomputer including CPU, ROM, RAM and I/O ports.

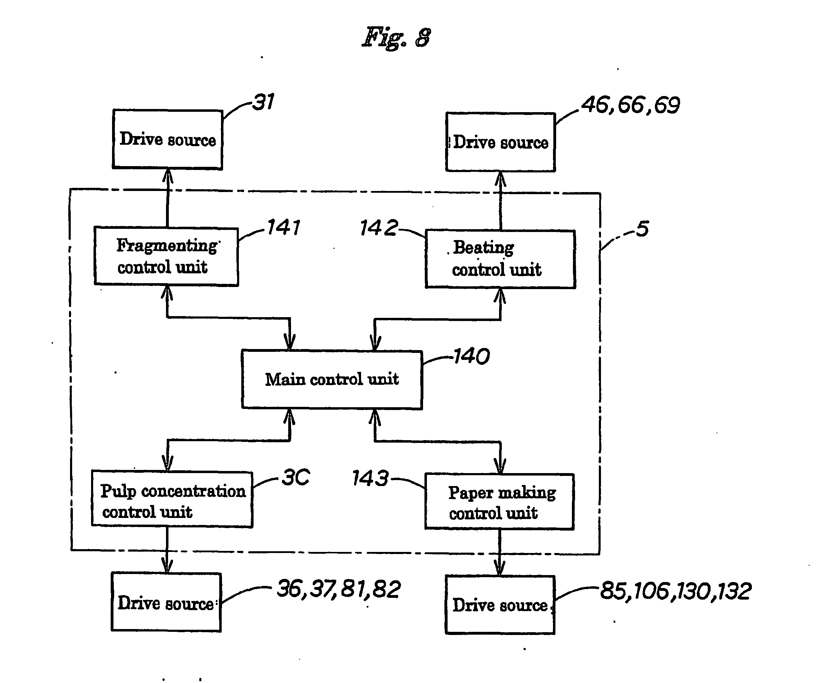

The device control unit 5 stores programs for mutually interlocking and executing the pulp making process of the pulp making unit 2, the concentration adjusting process of the concentration adjusting unit 3, and the paper making process of the paper making unit 4, and is composed of, as shown in Fig. 8, a main control unit 140, a fragmenting control unit 141 for controlling the drive source 31 of the fragmenting unit 10 (16) in the pulp making unit 2, a beating control unit 142 for controlling the drive sources 46, 66, 69 of the beating unit 11 (40, 47), a pulp concentration control unit 3C for controlling the drive sources 36; 37, 81, 82 of the pulp concentration adjusting unit 3 (3A, 3B), and a paper making control unit 143 for controlling the drive sources 85, 106, 130, 132 of the paper making process unit 90, the dewatering roll unit 91 in the paper making unit 4, and the drying process unit 92.

The main control unit 140 stores various information necessary for driving of the drive sources of the drive units 2 (10, 11), 3 (3A, 3B), 4 (90, 91, 92), for example, the driving time and rotating speed of the agitating device 16 in the fragmenting unit 10, the water feed timing and water feed volume of the water feeding device 17, the driving time and circulation amount of the circulation pump 69 in the beating unit 11, the driving time and rotating speed of the grinder 40, the adjusting timing and adjusting amount of beating gap G of the gap adjusting means 47, the running speed of the conveyors 100, 121 in the paper making unit 4, the driving time of the heating and drying unit 122, and the operation timing of the fixed size cutter 132, and others are appropriately and selectively entered by the keyboard and the like preliminarily as the data, and according to such control data, the detection results of the weight sensor 38, the position detection sensor and others are received, and thereby the control units 141, 142, 3C, 143 are controlled appropriately.

The used paper recycling apparatus 1 having such configuration is started when the power source is turned on, and the individual control units 2 (10, 11), 3 (3A, 3B) and 4 (90, 91, 92) are automatically controlled in mutual cooperation by the device control unit 5, and thereby the used paper UP, UP, ... charged into the inlet 7 of the apparatus case 6 are fragmented and beaten by the fragmenting unit 10 and the beating unit 11 of the pulp making unit 2, and the used paper pulp UPP is manufactured, then pulp suspension PS of paper making concentration is prepared in the pulp concentration adjusting unit 3, and this pulp suspension PS is processed in the paper making process unit 90, the dewatering roll unit 91, and the drying process unit 92 of the paper making unit 4, and recycled paper RP is produced, and is discharged into a recycled paper discharge tray 135 from the discharge port 136b of the apparatus case 6.

In the pulp making unit 2, the drive units are mutually interlocked and controlled automatically by a fragmenting control unit 141 and a beating control unit 142, and the following processes are executed.
i) The worker, as mentioned above, puts a specified number of sheet (about 500 sheets or about 2000 g in the illustrated preferred embodiment) of used paper UP of A4 format PPC into the fragmenting tank 15, and closes the inlet 7 after the notice by sound and/or display, and about 98 liters of water is charged into the water feeding device 17.
ii) The agitating device 16 is driven, and the used paper UP, UP, ... charged in the fragmenting tank 15 are agitated in normal and reverse rotation of the agitating impeller 30 driven by the drive motor 31, and mixed for a specified time (about 10 minutes to 20 minutes in the illustrated preferred embodiment) in the water supplied from the water feeding device 17, and the used paper UP, UP, ... are fragmented and beaten to be used paper pulp UPP.
iii) By driving of the agitating device 16 for a specified time, the used paper UP, UP,... are transformed into used paper pulp UPP, and the inlet 7 of the fragmenting tank 15 is opened by the opening valve 19, and the fragmenting tank 15 communicates with the used paper pulp circulation route 39, and the circulation pump 69, the grinder 40 and the gap adjusting means 47 of the beating unit 11 are driven.
   The agitating device 16 of the fragmenting unit 10 is driven, and the used paper pulp UPP left over in the fragmenting tank 15 and the used paper pulp UPP refluxed in the fragmenting tank 15 are agitated, and the degree of beating of the used paper pulp UPP in the fragmenting tank 15 is made uniform, and the beating process is promoted.
iv) In Fig. 6, the used paper pulp UPP fragmented by the fragmenting unit 10 is circulated in the used paper pulp circulation route 39 by the circulation pump 69, and is beaten by the grinder 40 (beating process). At this time, the beating gap G of the beating action surfaces 41a, 42a of the grinder 40 is adjusted by the gap adjusting means 47 to be narrower gradually from the beginning till the end of the beating process, and the beating process continues.
v) In the illustrated preferred embodiment, as mentioned above, at the first stage, the beating gap G is adjusted to 1 mm, and the used paper pulp UPP is circulated for 5 minutes, and pressurized and beaten by the grinder 40.
vi) At the second stage, the beating gap G is adjusted to 0.4 mm, and the used paper pulp UPP is circulated for 25 minutes, and pressurized and beaten by the grinder 40.
vii) At the third stage, the beating gap G is adjusted to 0.12 mm, and the used paper pulp UPP is circulated for 45 minutes, and pressurized and beaten by the grinder 40.
viii) At the final fourth stage, the beating gap G is adjusted to 0.05 mm, and the used paper pulp UPP is pressurized and beaten by the grinder 40, and is pulverized to a specified micron size (micro fibers are formed).
ix) The direction changeover valve 51 of the used paper pulp circulation route 39 is changed over, and the used paper pulp UPP discharged from the grinder 40 is discharged and collected in the used paper pulp collecting tank 50 by way of the discharge piping 49.
x) The used paper pulp UPP collected in the used paper pulp collecting tank 50 adjusted of its concentration to a target appropriate paper making concentration in division type, as mentioned above, by the beating concentration adjusting unit 3B of the pulp concentration adjusting unit 3, and is sent into the paper making unit 4 in the next process, and is recycled into paper.

In the used paper recycling apparatus 1 having such configuration, the following characteristic effects are exhibited.
(1) The pulp making process for fragmenting and beating the used paper UP and manufacturing used paper pulp UPP consists of a fragmenting process of agitating, crushing and fragmenting the used paper UP, and a beating process of beating the used paper UP fragmented in the fragmenting process, and in this beating process, the beating action surfaces 41a, 42a are disposed oppositely across a tiny beating gap G, and by disposing the grinder (beating means) 40 having a pair of beating disks rotating relatively, a used paper pulp circulation route 39 is formed, and the used paper pulp UPP beaten by the grinder 40 is beaten in the beating process while being circulated in the used paper pulp circulation route 39, and the beating gap G of the beating action surfaces 41a, 42a is adjusted to be narrower gradually from the beginning till the end of the beating process, so that a smooth and efficient beating operation is realized from the beginning till the end of the beating process.

That is, in an initial stage of the beating process, for example, the beating gap G of the beating action surfaces 41a, 42a is set to a clearance corresponding to the fiber size of used paper pulp UPP fragmented in the preceding fragmenting process, and a high beating rate is maintained while promoting invasion and passing of used paper pulp UPP smoothly into the beating gap G, and in a final stage of the beating process, the gap size is adjusted to the clearance for pulverizing to the fiber size of used paper pulp UPP of desired finish size, so that the used paper pulp UPP of desired fiber size can be obtained finally. Therefore, in a limited narrow working space, from the beginning till the end of the beating process, a smooth and efficient beating is realized.

As a result, the used paper UP is decomposed into fiber level (to be pulp), and the characters and drawings written in the paper are completely decomposed and lost, and cannot be restored, and leak or disclosure of the confidential information or personal information composed of characters and drawings can be effective prevented, and a high confidentiality is maintained.
(2) Moreover, since particularly large power is not needed for such smooth and efficient beating process, it is ideal for the used paper recycling apparatus of furniture size that can be installed in a small shop or in a room of general household, and it is effective to prevent leak or disclosure of the confidential information or personal information written in documents, from personal information written in private letters to confidential information of government offices and general enterprises printed in various documents, and the running cost is also suppressed low.
(3) Besides, the used paper pulp circulation route 39 is formed by using at least one grinder 40, and the used paper pulp UPP after the beating process by the grinder 40 is circulated in the used paper pulp circulation route 39, and is processed, and the used paper pulp UPP is beaten efficiently according to the purpose, and an adequate beating efficiency is obtained.

In particular, in a limited process space (working space) of the used paper recycling apparatus 1 of furniture size, the used paper pulp beating process route of infinite length not limited in length, in principle, can be formed, and the used paper recycling apparatus 1 of compact size of furniture size may have a wide beating process space nearly equal to that of the beating process in a large-scale apparatus.
(4) The pulp concentration adjusting unit 3 is provided for adjusting the concentration of the used paper pulp UPP supplied in the paper making unit 4, and this pulp concentration adjusting unit 3 includes a beating concentration adjusting unit 3A for adjusting the beating concentration of the used paper pulp UPP in the pulp making unit 2 corresponding to the beating efficiency by the grinder 40, and a paper making concentration adjusting means 3B for adjusting the paper making concentration of the used paper pulp UPP in the paper making unit 4 corresponding to the finished paper quality of the recycled paper RP to be recycled, and hence the concentration of the used paper pulp UPP can be adjusted in two stages, and the concentration can be adjusted by effectively utilizing the small working space of the used paper recycling apparatus 1 of furniture size, and the used paper can be recycled at high operation efficiency.

That is, the beating process by the grinder 40 of relatively high concentration is carried out by the beating concentration adjusting unit 3A for beating the used paper pulp UPP adjusted to a high concentration (beating concentration), and this used paper pulp UPP is adjusted to a low concentration (paper making concentration) corresponding to the finished paper quality of the recycled paper by the paper making concentration adjusting unit 3B, and is sent into the next process of the paper making unit 4, so that a series of used paper recycling process can be executed efficiently in a narrow working space.
(5) The pulp concentration adjusting unit 3 operates on the weight system for adjusting the concentration of the used paper pulp UP by measuring the weight to determine the mixing rate of the used paper UP and the water W, and if the used paper is charged in an irregular amount, the concentration can be adjusted flexibly.
(6) The paper making concentration adjusting unit 3B includes a division extracting unit 75 for dividing and extracting a specified small portion from the whole volume of the used paper pulp UPP manufactured in the preceding process of the pulp manufacturing unit 2, and a specified amount of water W for concentration adjustment is added to the used paper pulp UPP of specified small portion divided and extracted by this division extracting unit 75, and therefore the concentration of the used paper pulp UPP is adjusted in a divided small portion, not in batch of the whole volume, and the processing capacity is enhanced, while the water consumption is saved substantially, and the apparatus is realized in a small structure.
(4) The used paper recycling apparatus 1 of the present preferred embodiment having such beating technology is compact in the apparatus structure, and can be installed anywhere, from a large office to a small office or a private home, and from this point of view, too, leak or disclosure of confidential information and personal information can be securely prevented.

### Preferred embodiment 2

This preferred embodiment is indicated by double dot chain line in Fig. 6, and it is similar to preferred embodiment 1, except that the structure of the beating unit 11 in the pulp making unit 2 is modified.

That is, in the beating unit 11 of this preferred embodiment, the used paper pulp circulation route 39 includes a bypass route 151 having a reserve tank 150 for storing the used paper pulp UPP beaten by the grinder 40, being connected by way of a direction changeover valve 152 as changeover means. The direction changeover valve 152 is specifically an electromagnetic valve, and is electrically connected to a beating control unit 142 of the device control unit 5.

The beating control unit 142 is designed to drive and control the direction changeover valve 152 so that the fragmenting tank 15 of the fragmenting unit 10 and the reserve tank 150 of the bypass route 151 may be changed over and used selectively, when executing the beating method in preferred embodiment 1.

More specifically, in the beating process in preferred embodiment 1, the used paper pulp UPP flowing out into the used paper pulp circulation route 39 from the fragmenting tank 15 by the circulation pump 69 is beaten by the grinder 40, and is not refluxed into the fragmenting tank 15, but flows into the reserve tank 150 of the bypass route 151 from the direction changeover valve 152, and this state is maintained until all of used paper pulp UPP in the fragmenting tank 15 flows out. When all of used paper pulp UPP in the fragmenting tank 15 flows out, the direction changeover valve 152 is changed over, and this time the used paper pulp UPP flowing out in the used paper pulp circulation route 39 from the reserve tank 150 is beaten by the grinder 40, and is not refluxed into the reserve tank 150, but flows into the fragmenting tank 15 of the used paper pulp circulation route 39 from the direction changeover valve 152, and this state is maintained until all of used paper pulp UPP in the reserve tank 150 flows out. Thereafter, changeover of the direction changeover valve 152 is repeated.

Thus, two storage tanks 10, 150 are used alternately, and in the circulatory beating process of this preferred embodiment, it is possible to avoid the circumstance in which the used paper pulp UPP flows out from the fragmenting tank 15 (or reserve tank 150) into the used paper pulp circulation route 39 while the used paper pulp UPP beaten by the grinder 40 flows into the fragmenting tank 15 (or reserve tank 150), and thereby preventing mixture of used paper pulp UPP different in the degree of beating within the fragmenting tank 15 (or reserve tank 150), and not only it is not necessary to drive the agitating device 16 as in preferred embodiment 1, but also the beating process efficiency is enhanced as compared with the beating process in preferred embodiment 1.

The other structure and action are same as in preferred embodiment 1.

### Preferred embodiment 3

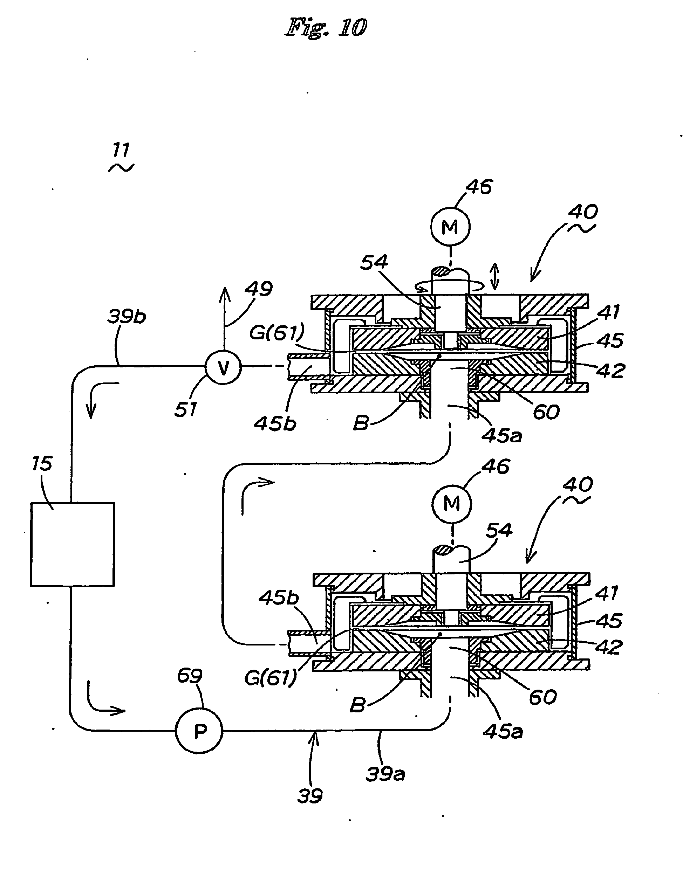

This preferred embodiment is shown in Fig. 10, and it is similar to preferred embodiment 1, except that the structure of the beating unit 11 in the pulp making unit 2 is modified.

That is, in the beating unit 11 of the present preferred embodiment, a plurality of (two in the present preferred embodiment) grinders 40, 40 are disposed in series in the used paper pulp circulation route 39.

The beating gaps G, G of these grinders 40, 40 are controlled to be narrower gradually at same dimension from the beginning till the end of the beating process.

In this case, the beating gaps G, G of the grinders 40. 40 by the gap adjusting means 47 is controlled and adjusted, same as in preferred embodiment 1, in the following methods: (i) the beating gaps G, G of the grinders 40, 40 are controlled to be narrower gradually at same dimension from the beginning till the end of the beating process, (ii) the beating gaps G, G of the grinders 40. 40 are controlled to be narrower continuously at same dimension from the beginning till the end of the beating process, and others, and the former method is employed in the illustrated preferred embodiment.

The timing and magnitude of gradual narrowing of the beating gaps G, G of the grinders 40, 40 may be determined appropriately, same as in preferred embodiment 1, so that the beaten used paper pulp UPP may not be clogged in the beating gap G according to the conditions obtained by tests in consideration of the relation of the concentration of the used paper pulp UPP, and the circulation flow rate and time of the used paper pulp UPP by the circulation pump 69.

In the illustrated preferred embodiment, the conditions are set as follows.
(a) Concentration of used paper pulp UPP being beaten: about 2%
(b) Size of beating gap G of the grinder 40: 4 stages at the following timing.

First stage: the beating gap G is 1 mm, being circulated for 2.5 minutes.

Second stage: the beating gap G is 0.4 mm, being circulated for 12.5 minutes.

Third stage: the beating gap G is 0.12 mm, being circulated for 22.5 minutes.

Fourth stage: the beating gap G is 0.05 mm, and the beaten pulp is discharged and collected in the used paper pulp collecting tank 50.

Evidently, in the beating process of this preferred embodiment, by disposing two grinders 40, 40 in series, the beating efficiency is 2 times higher, and the required time for beating process is 1/2 as compared with preferred embodiment 1.

The other structure and action are same as in preferred embodiment 1.

### Preferred embodiment 4

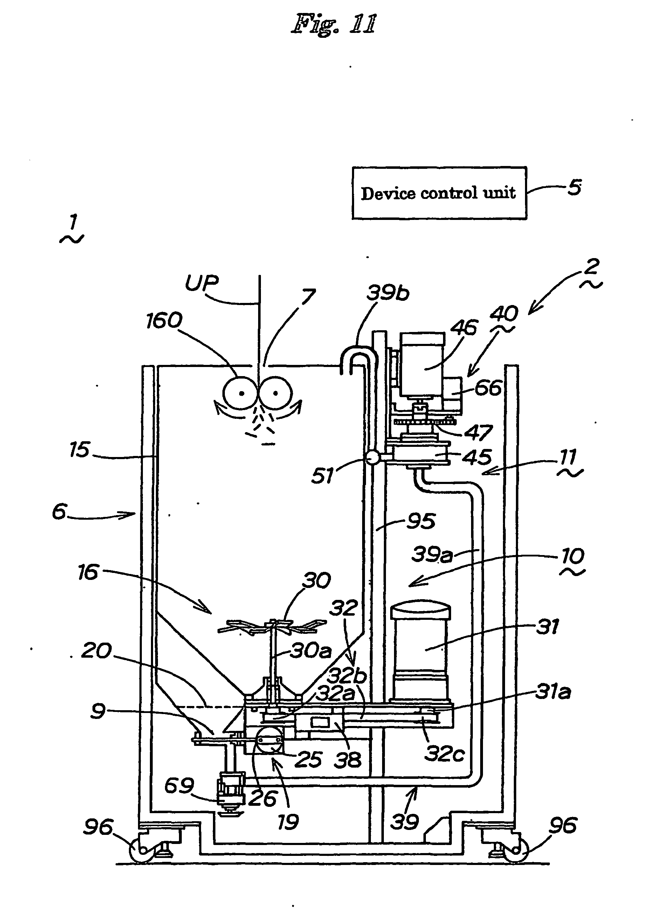

This preferred embodiment is shown in Fig. 11, and it is similar to preferred embodiment 1, except that the structure of the fragmenting unit 10 in the pulp making unit 2 and others is modified.

That is, in the used paper recycling apparatus 1 of the present preferred embodiment, a shredder unit (shredder means) 160 is provided in the inlet 7 of the fragmenting tank 15 of the fragmenting unit 10, and the used paper UP charged into the inlet 7 is preliminarily shredded by the shredder unit 160, and the efficiency of fragmenting and beating by the agitating device 16 is enhanced. A specific structure of the shredder unit 160 is similar to a conventional shredder, and has a basic structure of cutting the used paper UP into small pieces (double cut type, cross cut type, etc.).

The other structure and action are same as in preferred embodiment 1.

Having described preferred embodiments of the invention with reference to the accompanying drawings, it is to be understood that the invention is not limited to those precise embodiments, and that various changes and modifications may be effected therein by one skilled in the art without departing from the scope or spirit of the invention as defined in the appended claims.

For example, in the illustrated preferred embodiments, the paper making concentration adjusting unit 3B is of weight type, and the division extracting unit 75 divides and extracts a specified small portion by weight measurement out of the whole volume of the used paper pulp UPP manufactured in the preceding process of the pulp making unit 2, and the suspension preparing unit 76 adds a specified amount of water for concentration adjustment by weight measurement to the specified small portion of the used paper pulp UPP divided and extracted by the division extracting unit 75, and thereby pulp suspension PS of specified concentration is prepared, but instead of the weight type, this operation may be carried out by volume measurement.

That is, the division extracting unit 75 has a pulp division tank (not shown) for dividing and containing a specified small portion out of the whole volume of the used paper pulp UPP manufactured in the pulp manufacturing unit 2, and the suspension preparing unit 76 has a concentration adjusting tank (not shown) for containing a specified amount of used paper pulp UPP and concentration adjusting water divided and contained in the pulp division tank, and the water may be supplied into the concentration adjusting tank so as to reach a specified volume including the specified amount of used paper pulp UPP supplied from the pulp division tank into the concentration adjusting tank.

## Claims

1. A pulp manufacturing method applied in a used paper recycling apparatus, installed in a fumiture-seed apparatus case (6); the used paper recycling apparatus being adapted to execute a pulp making process of fragmenting used paper and manufacturing used paper pulp, and a paper making process of making the used paper pulp manufactured in the pulp making process and producing recycled paper, the said method constituting the pulp making process in the used paper recycling apparatus and comprising:
a fragmenting process of agitating, grinding and fragmenting the used paper, and a beating process of beating the used paper fragmented in the fragmenting process,
wherein in the beating process, a used paper pulp circulation route (39) is formed by disposing at least one beating means (40) having a pair of relatively rotating beating disks (41, 42), beating action surfaces (41a, 42a) of the beating disks (41, 42) are disposed oppositely across a tiny beating gap, and
the used paper pulp being beaten by the beating means (40) is circulated in the used pulp circulation route (39) while the beating process is executed;
**characterized in that** the beating gap of the beating action surfaces (41a, 42a) is controlled to be narrowed gradually from the beginning to the end of the beating process.

2. A pulp manufacturing method of the used paper recycling apparatus according to claim 1,
wherein in the beating process, the beating gap of the beating means (40) is controlled to be narrowed in gradual steps from the beginning till the end of the beating process.

3. A pulp manufacturing method of the used paper recycling according to claim 1,
wherein in the beating process, the beating gap of the beating means (40) is controlled to be narrowed in continuous steps from the beginning till the end of the beating process.

4. A pulp manufacturing method of the used paper recycling apparatus according to claim 1,
wherein the fragmenting process is **characterized by** charging the used paper into fragmenting tank (15) and supplying water into the fragmenting tank (15) in a quantity corresponding to the charged amount of the used paper, and agitating the used paper and water by agitating means (16) disposed rotatably in the fragmenting tank (15), thereby fragmenting and beating the used paper.

5. A pulp manufacturing method of the used paper recycling apparatus according to claim 4,
wherein the supply amount of water in the fragmenting process is determined so that the concentration of the used paper pulp fragmented and beaten by the agitating means (16) may be a maximum allowable concentration for the beating capacity of the beating means (40) in the subsequent beating process.

6. A pulp making device of a used paper recycling apparatus installed in an apparatus case (6) of furniture size, the said pulp making device (2) comprising a fragmenting unit (10) of agitating, grinding and fragmenting the used paper, and a beating unit (11) of beating the used paper fragmented in the fragmenting unit (10),
wherein the beating unit (11) forms a used paper pulp circulation route (39) by disposing at least one beating means (40) for beating the used paper pulp, and includes circulating means (69) for circulating the used paper pulp in the used paper pulp circulation route (39), and beating control means (142) for controlling the beating means (40) and the circulating means (69) to cooperate mutually,
the beating means (40) is formed as a grinder (40) having a pair of beating disks (41, 42) adapted to be rotated and driven relatively, beating action surfaces (41 a, 42a) of the beating disks (41, 42) being disposed oppositely across a tiny beating gap, and
the beating control means (142) adapted to control the beating means (40) and the circulating means (69) so as to execute the beating process of the used paper pulp beaten by the beating means (40) while it is circulated in the used paper pulp circulation route (39) by the circulating means;
the said pulp making device (2) being **characterized in that** the beating control means is adapted to narrow the beating gap between the beating action surfaces (41a, 42a) gradually from the beginning to the end of the beating process.

7. A pulp making device of a used paper recycling apparatus according to claim 6,
wherein the beating means (40) is formed as a grinder (40) having a pair of beating disks (41, 42) rotated and driven relatively, a beating action surfaces (41 a, 42a) of the beating disks (41, 42) are disposed oppositely across a tiny beating gap, and
the beating action surfaces (41a, 42a) are provided with annular flat surfaces (41b, 42b) formed on the outer circumference of the beating disks (41, 42), and the annular flat surfaces (41 b, 42b) form the beating gap (G).

8. A pulp making device of a used paper recycling apparatus according to claim 7,
wherein the beating means (40) includes a beating tank (45) having a supply port (45a) for supplying the used paper pulp from the upstream side and a discharge port (45b) for discharging the beaten used paper pulp to the downstream side, a pair of beating disks (41, 42) disposed relatively and rotatably in the beating tank (45), and a rotation drive source (46) for rotating and moving these beating disks (41, 42) relatively, and
the used paper pulp supplied from the supply port (45a) is pressurized and beaten by the beating action surfaces (41 a, 42a) while being passed through the beating gap (G) between the beating disks (41, 42).

9. A pulp making device of a used paper recycling apparatus according to claim 8,
wherein gap adjusting means (47) is provided for moving the pair of beating disks (41, 42) relatively in the rotation axial direction, and adjusting the beating gap of these beating disks (41, 42).

10. A pulp making device of the used paper recycling apparatus according to claim 7,
wherein one of the pair of beating disks (41, 42) is a fixed beating disk (41, 42) provided fixedly in the rotating direction, and the other is a rotatable beating disk (41, 42) provided rotatably, and
an inlet (60) communicating with the supply port (45a) of the beating tank is formed in a central position of the beating action surface (41 a, 42a) of the fixed beating disk (41, 42), and two annular flat surfaces (41b, 42b) formed on the outer peripheral edge of the beating action surfaces (41a, 42a) of the pair of beating disks (41, 42) form an exit communicating with a discharge port (45b) of the beating tank and having the beating gap.

11. A pulp making device of the used paper recycling apparatus according claim 10,
wherein the beating action surfaces (41a, 42a) are grinding surfaces formed by coupling multiple abrasive grains by means of a binding material.

12. A pulp making device of the used paper recycling apparatus according to claim 6,
wherein the fragmenting unit (10) includes a fragmenting tank (15) having a used paper feed port (7) for feeding and supplying the used paper, and a discharge port (9) for discharging the fragmented used paper pulp to the downstream side, and rotatable agitating means (16) disposed rotatably in the fragmenting tank (15), and the used paper supplied from the used paper feed port (7) is mixed with water and agitated by the agitating means (16), and fragmented and beaten.

13. A pulp making device of the used paper recycling apparatus according to claim 12,
wherein the fragmenting unit (10) has water feed means (17) for supplying water into the fragmenting tank (15).

14. A pulp making device of the used paper recycling apparatus according to claim 12,
wherein shredder means (160) is provided at the used paper feed port (7) of the fragmenting tank (15), and the used paper supplied into the used paper feed port (7) is preliminarily shredded by the shredder means (160), and is agitated by the agitating means (16).

15. A pulp making device of the used paper recycling apparatus according to claim 12,
wherein in the used paper pulp circulation route (39), the fragmenting tank (15) of the fragmenting unit (10) is included, and when executing the beating method, the agitating means (16) of the fragmenting unit (10) is driven and controlled.

16. A pulp making device of the used paper recycling apparatus according to claim 15,
wherein in the used paper pulp circulation route (39), a bypass route (151) including a reserve tank (150) for storing the used paper pulp beaten by the beating means (40) is connected by way of changeover means (152), and
when executing the beating method, the changeover means (152) is driven and controlled so as to change over and use the fragmenting tank (15) of the fragmenting unit (10) and the reserve tank (150) of the bypass route (151) selectively.

17. A used paper recycling apparatus comprising, in an apparatus case (6) of furniture size, a pulp making device (2) according to one of claims 6 to 16, a paper making unit (4) for making the used paper pulp manufactured in the pulp making device (2) and producing recycled paper, and a device control unit (5) for driving and controlling the pulp making device (2) and the paper making unit (4) such that they mutually cooperate.

18. A used paper recycling apparatus according to claim 17, further composing:
pulp concentration adjusting means (3) for adjusting the concentration of the used paper pulp supplied in the paper making unit (4), by adjusting the mixing rate of the used paper and the water charged in the apparatus,
wherein the pulp concentration adjusting means (3) includes beating concentration adjusting means (3A) for adjusting the beating concentration of the used paper pulp in the pulp making device (2) corresponding to the beating efficiency by the beating means (40), paper making concentration adjusting means (3B) for adjusting the paper making concentration of the used paper pulp in the paper making unit (4) corresponding to the finished paper quality of the recycled paper to be recycled, and pulp concentration control means (3C) for driving and controlling in cooperation with the beating concentration adjusting means (3A) and the paper making concentration adjusting means (3B).

19. A used paper recycling apparatus according to claim 18,
wherein the paper making concentration adjusting means (3B) includes, division extracting means (75) for extracting a division only for a specified small portion out of the whole volume of the used paper pulp manufactured in the pulp making section in the preceding process, suspension preparing means (76) for preparing a pulp suspension of a specified concentration by adding a specified amount of water for concentration adjustment to the specified small portion of the used paper pulp divided and extracted by the division extracting means (75), and paper making concentration control means (77) for driving and controlling in cooperation with the division extracting means (75) and the suspension preparing means (76).

20. A used paper recycling apparatus according to claim 18,
wherein the pulp concentration adjusting means (3) is of weight type for adjusting the mixing rate of the used paper and the water charged into the apparatus by weight measurement, and adjusting the concentration of the used paper pulp to be supplied in the paper making unit (4).

## Patentansprüche

1. Pulpenherstellungsverfahren, das bei einer Altpapierrecyclingvorrichtung zur Anwendung kommt, die in einem Apparategehäuse (6) in Möbelgröße installiert ist, wobei die Altpapierrecyclingvorrichtung ausgebildet ist, um einen Pulpenherstellungsvorgang des Zerkleinerns von Altpapier und des Herstellens einer Altpapierpulpe und ein Papierherstellungsverfahren zur Herstellung der Altpapierpulpe, die beim Pulpenherstellungsvorgang hergestellt wird, und zur Herstellung von Recyclingpapier durchzuführen, wobei das Verfahren den Pulpenherstellungsvorgang in der Altpapierrecyclingvorrichtung darstellt und aufweist:
einen Zerkleinerungsvorgang des Rührens, Mahlens und Zerkleinerns des Altpapiers und einen Mahlvorgang des Mahlens des Altpapiers, das beim Zerkleinerungsvorgang zerkleinert wurde,
wobei beim Mahlvorgang ein Altpapierpulpenzirkulationsweg (39) durch Anordnen von mindestens einer Mahleinrichtung (40) mit einem Paar sich relativ drehenden Mahlscheiben (41, 42) gebildet wird, wobei die Mahlwirkungsflächen (41a, 42a) der Mahlscheiben (41, 42) entgegengesetzt über einen winzigen Mahlspalt angeordnet sind, und
wobei die Altpapierpulpe, die mittels der Mahleinrichtung (40) gemahlen wird, im Altpapierpulpenzirkulationsweg (39) zirkuliert, während der Mahlvorgang durchgeführt wird;
**dadurch gekennzeichnet, dass** der Mahlspalt der Mahlwirkungsflächen (41a, 42a) so gesteuert wird, dass er sich allmählich vom Anfang bis zum Ende des Mahlvorganges verengt.

2. Pulpenherstellungsverfahren für die Altpapierrecyclingvorrichtung nach Anspruch 1,
bei dem beim Mahlvorgang der Mahlspalt der Mahleinrichtung (40) so gesteuert wird, dass er in allmählichen Schritten vom Anfang bis zum Ende des Mahlvorganges verengt wird.

3. Pulpenherstellungsverfahren für die Altpapierrecyclingvorrichtung nach Anspruch 1,
bei dem beim Mahlvorgang der Mahlspalt der Mahleinrichtung (40) so gesteuert wird, dass er in kontinuierlichen Schritten vom Anfang bis zum Ende des Mahlvorganges verengt wird.

4. Pulpenherstellungsverfahren für die Altpapierrecyclingvorrichtung nach Anspruch 1,
bei dem der Zerkleinerungsvorgang **dadurch gekennzeichnet ist, dass** das Altpapier in einen Zerkleinerungsbehälter (15) gefüllt und Wasser in den Zerkleinerungsbehälter (15) in einer Menge zugeführt wird, die der eingefüllten Menge an Altpapier entspricht, und dass das Altpapier und das Wasser mittels einer Rühreinrichtung (16) umgerührt werden, die drehbar im Zerkleinerungsbehälter (15) angeordnet ist, wodurch das Altpapier zerkleinert und gemahlen wird.

5. Pulpenherstellungsverfahren für die Altpapierrecyclingvorrichtung nach Anspruch 4,
bei dem die Zuführmenge an Wasser in den Zerkleinerungsvorgang so festgelegt wird, dass die Konzentration der Altpapierpulpe, die mittels der Rühreinrichtung (16) zerkleinert und gemahlen wurde, eine maximal zulässige Konzentration für die Mahlkapazität der Mahleinrichtung (40) beim nachfolgenden Mahlvorgang sein kann.

6. Pulpenherstellungsvorrichtung für eine Altpapierrecyclingvorrichtung, die in einem Apparategehäuse (6) in Möbelgröße installiert ist, wobei die Pulpenherstellungsvorrichtung (2) eine Zerkleinerungsanlage (10) zum Rühren, Mahlen und Zerkleinem des Altpapiers und eine Mahlanlage (11) zum Mahlen des in der Zerkleinerungsanlage (10) zerkleinerten Altpapiers aufweist,
wobei die Mahlanlage (11) einen Altpapierpulpenzirkulationsweg (39) durch Anordnen von mindestens einer Mahleinrichtung (40) zum Mahlen der Altpapierpulpe bildet und eine Zirkulationseinrichtung (69) für das Zirkulieren der Altpapierpulpe im Altpapierpulpenzirkulationsweg (39) und eine Mahlsteuereinrichtung (142) für das Steuern der Mahleinrichtung (40) und der Zirkulationseinrichtung (69) umfasst, damit sie wechselseitig zusammenzuwirken,
die Mahleinrichtung (40) als ein Mahlwerk (40) mit einem Paar Mahlscheiben (41, 42) ausgebildet ist, die so ausgebildet sind, dass sie relativ gedreht und angetrieben werden, wobei die Mahlwirkungsflächen (41a, 42a) der Mahlscheiben (41, 42) entgegengesetzt über einen winzigen Mahlspalt angeordnet sind, und
die Mahlsteuereinrichtung (142) ausgebildet ist, um die Mahleinrichtung (40) und die Zirkulationseinrichtung (69) zu steuern, um so den Mahlvorgang der Altpapierpulpe durchzuführen, die von der Mahleinrichtung (40) gemahlen wurde, während sie im Altpapierpulpenzirkulationsweg (39) mittels der Zirkulationseinrichtung zirkuliert;
wobei die Pulpenherstellungsvorrichtung (2) **dadurch gekennzeichnet ist, dass** die Mahlsteuereinrichtung ausgebildet ist, um den Mahlspalt zwischen den Mahlwirkungsflächen (41a, 42a) allmählich vom Anfang bis zum Ende des Mahlvorganges zu verengen.

7. Pulpenherstellungsvorrichtung für eine Altpapierrecyclingvorrichtung nach Anspruch 6,
bei der die Mahleinrichtung (40) als ein Mahlwerk (40) mit einem Paar Mahlscheiben (41, 42) ausgebildet ist, die relativ gedreht und angetrieben werden, wobei die Mahlwirkungsflächen (41a, 42a) der Mahlscheiben (41, 42) entgegengesetzt über einen winzigen Mahlspalt angeordnet sind, und
bei der die Mahlwirkungsflächen (41a, 42a) mit ringförmigen flachen Flächen (41b, 42b) versehen sind, die auf dem äußeren Umfang der Mahlscheiben (41, 42) ausgebildet sind, und wobei die ringförmigen flachen Flächen (41b, 42b) den Mahlspalt (G) bilden.

8. Pulpenherstellungsvorrichtung für eine Altpapierrecyclingvorrichtung nach Anspruch 7,
bei der die Mahleinrichtung (40) umfasst: einen Mahlbehälter (45) mit einer Zuführöffnung (45a) für das Zuführen der Altpapierpulpe von der stromaufwärts gelegenen Seite und eine Austrittsöffnung (45b) für das Ablassen der gemahlenen Altpapierpulpe zur stromabwärts gelegenen Seite; ein Paar Mahlscheiben (41, 42), die relativ und drehbar im Mahlbehälter (45) angeordnet sind; und eine Rotationsantriebsquelle (46) für das relative Drehen und Bewegten dieser Mahlscheiben (41, 42), und
wobei die von der Zuführöffnung (45a) zugeführte Altpapierpulpe unter Druck gesetzt und mittels der Mahlwirkungsflächen (41a, 42a) gemahlen wird, während sie durch den Mahlspalt (G) zwischen den Mahlscheiben (41, 42) gelangt.

9. Pulpenherstellungsvorrichtung für eine Altpapierrecyclingvorrichtung nach Anspruch 8,
bei der eine Spalteinstelleinrichtung (47) für das Bewegen des Paares der Mahlscheiben (41, 42) relativ in der Rotationsachsenrichtung und das Einstellen des Mahlspaltes dieser Mahlscheiben (41, 42) bereitgestellt wird.

10. Pulpenherstellungsvorrichtung für eine Altpapierrecyclingvorrichtung nach Anspruch 7,
bei der eine des Paares der Mahlscheiben (41, 42) eine stationäre Mahlscheibe (41, 42) ist, die stationär in der Rotationsrichtung bereitgestellt wird, und bei der die andere eine drehbare Mahlscheibe (41, 42) ist, die drehbar bereitgestellt wird, und
ein Einlass (60), der mit der Zuführöffnung (45a) des Mahlbehälters in Verbindung steht, in einer mittleren Position der Mahlwirkungsfläche (41a, 42a) der stationären Mahlscheibe (41, 42) gebildet wird und zwei ringförmige flache Flächen (41b, 42b), die auf dem äußeren peripheren Rand der Mahlwirkungsflächen (41a, 42a) des Paares der Mahlscheiben (41, 42) ausgebildet sind, einen Auslass bilden, der mit der Austrittsöffnung (45b) des Mahlbehälters in Verbindung steht und den Mahlspalt aufweist.

11. Pulpenherstellungsvorrichtung für eine Altpapierrecyclingvorrichtung nach Anspruch 10,
bei der die Mahlwirkungsflächen (41 a, 42a) Mahlflächen sind, die durch Verbinden von mehreren Schleifkörpern mittels eines Bindemittels gebildet werden.

12. Pulpenherstellungsvorrichtung für eine Altpapierrecyclingvorrichtung nach Anspruch 6,
bei der die Zerkleinerungsanlage (10) einen Zerkleinerungsbehälter (15) mit einer Altpapierzuführöffnung (7) für das Zuführen und Liefem des Altpapiers und eine Austrittsöffnung (9) für das Ablassen der zerkleinerten Altpapierpulpe zur stromabwärts gelegenen Seite und eine drehbare Rühreinrichtung (16) umfasst, die drehbar im Zerkleinerungsbehälter (15) angeordnet ist, und wobei das von der Altpapierzuführöffnung (7) zugeführte Altpapier mit Wasser gemischt und mittels der Rühreinrichtung (16) umgerührt und zerkleinert und gemahlen wird.

13. Pulpenherstellungsvorrichtung für eine Altpapierrecyclingvorrichtung nach Anspruch 12,
bei der die Zerkleinerungsanlage eine Wasserzuführeinrichtung (17) für das Zuführen von Wasser in den Zerkleinerungsbehälter (15) aufweist.

14. Pulpenherstellungsvorrichtung für eine Altpapierrecyclingvorrichtung nach Anspruch 12,
bei der eine Reißtrommeleinrichtung (160) an der Altpapierzuführöffnung (7) des Zerkleinerungsbehälters (15) bereitgestellt wird und das in die Altpapierzuführöffnung (7) zugeführte Altpapier vorher mittels der Reißtrommeleirnrichtung (160) zerfasert und mittels der Rühreinrichtung (16) umgerührt wird.

15. Pulpenherstellungsvorrichtung für eine Altpapierrecyclingvorrichtung nach Anspruch 12,
bei der im Altpapierpulpenzirkulationsweg (39) der Zerkleinerungsbehälter (15) der Zerkleinerungsanlage (10) eingeschlossen ist, und wobei, wenn das Mahlverfahren durchgeführt wird, die Rühreinrichtung (16) der Zerkleinerungsanlage (10) angetrieben und gesteuert wird.

16. Pulpenherstellungsvorrichtung für eine Altpapierrecyclingvorrichtung nach Anspruch 15,
bei der im Altpapierpulpenzirkulationsweg (39) ein Umgehungsweg (151), der einen Reservebehälter (150) für das Lagern der von der Mahleinrichtung (40) gemahlenen Altpapierpulpe umfasst, mittels einer Umschalteinrichtung (152) verbunden ist, und,
wenn das Mahlverfahren durchgeführt wird, die Umschalteinrichtung (152) so angetrieben und gesteuert wird, dass selektiv der Zerkleinerungsbehälter (15) der Zerkleinerungsanlage (10) und der Reservebehälter (150) des Umgehungsweges (151) umgeschaltet und benutzt werden.

17. Altpapierrecyclingvorrichtung, die in einem Apparatgehäuse (6) in Möbelgröße aufweist: eine Pulpenherstellungsvorrichtung (2) nach einem der Ansprüche 6 bis 16; eine Papierherstellungsanlage (4) für die Herstellung der Altpapierpulpe, die in der Pulpenherstellungsvorrichtung (2) hergestellt wird, und für das Herstellen von Recyclingpapier; und eine Vorrichtungssteueranlage (5) für das Antreiben und Steuern der Pulpenherstellungsvorrichtung (2) und der Papierherstellungsanlage (4), so dass sie wechselseitig zusammenwirken.

18. Altpapierrecyclingvorrichtung nach Anspruch 17, die außerdem aufweist:
eine Pulpenkonzentrationseinstelleinrichtung (3) für das Einstellen der Konzentration der Altpapierpulpe, die der Papierherstellungsanlage (4) zugeführt wird, indem die Mischgeschwindigkeit des Altpapiers und des in die Vorrichtung eingefüllten Wassers eingestellt wird,
wobei die Pulpenkonzentrationseinstelleinrichtung (3) umfasst: eine Mahlkonzentrationseinstelleinrichtung (3A) für das Einstellen der Mahlkonzentration der Altpapierpulpe in der Pulpenherstellungsvorrichtung (2) entsprechend dem Mahlwirkungsgrad der Mahleinrichtung (40); eine Konzentrationseinstelleinrichtung für die Papierherstellung (3B) für das Einstellen der Papierherstellungskonzentration der Altpapierpulpe in der Papierherstellungsanlage (4) entsprechend der Fertigpapierqualität des Recyclingpapiers, das recycelt wird; und eine Pulpenkonzentrationsteuereinrichtung (3C) für das Antreiben und Steuern im Zusammenwirken mit der Mahlkonzentrationseinstelleinrichtung (3A) und der Konzentrationseinstelleinrichtung für die Papierherstellung (3B).

19. Altpapierrecyclingvorrichtung nach Anspruch 18,
bei der die Konzentrationseinstelleinrichtung für die Papierherstellung (3B) umfasst: eine Teilentnahmeeinrichtung (75) für das Entnehmen nur eines Teils für einen spezifischen kleinen Anteil aus dem Gesamtvolumen der im Pulpenberstellungsabschnitt beim vorhergehenden Vorgang hergestellten Altpapierpulpe; eine Suspensionsherstellungseinrichtung (76) für die Herstellung einer Pulpensuspension mit einer vorgeschriebenen Konzentration durch Hinzufügen einer vorgeschriebenen Wassermenge für die Konzentrationseinstellung des spezifischen kleinen Anteils der Altpapierpulpe, die mittels der Teilentnahmeeinricbtung (75) geteilt und entnommen wurde; und eine Konzentrationssteuereinrichtung für die Papierherstellung (77) für das Antreiben und Steuern im Zusammenwirken mit der Teilentnahmeeinrichtung (75) und der Suspensionsherstellungseinrichtung (76).

20. Altpapierrecyclingvorrichtung nach Anspruch 18,
bei der die Pulpenkonzentrationseinstelleinrichtung (3) auf Gewichtsbasis für die Einstellung der Mischgeschwindigkeit des Altpapiers und des in die Vorrichtung eingefüllten Wassers mittels einer Gewichtsmessung funktioniert und die Konzentration der Altpapierpulpe einstellt, die der Papierherstellungsanlage (4) zugeführt wird.

## Revendications

1. Procédé de fabrication de pâte utilisé dans un appareil de recyclage de papier usagé, installé dans un boîtier d'appareil de la taille d'un meuble, (6); l'appareil de recyclage du papier usagé étant adapté pour exécuter un processus de fabrication de pâte, consistant à fragmenter le papier usagé et à fabriquer de la pâte de papier usagé, et un processus de fabrication de papier consistant à fabriquer la pulpe de papier usagé fabriquée dans le processus de fabrication de la pulpe, et de production de papier recyclé; ledit procédé constituant le processus de fabrication de pâte dans l'appareil de recyclage du papier usagé et comprenant :
un processus de fragmentation, consistant à agiter, défibrer à la meule et fragmenter le papier usagé, et un processus de raffinage en pile, consistant à raffiner en pile le papier usagé fragmenté lors du processus de fragmentation ;
dans lequel, au cours du processus de raffinage en pile, un trajet de circulation de la pâte de papier usagé (39) est formé par la mise en place d'au moins un moyen de raffinage en pile (40) comportant une paire de disques de raffinage en pile à rotation relative (41, 42), les surfaces actives du raffinage en pile (41a, 42a) des disques de raffinage en pile (41, 42) étant agencées de manière opposée à travers un espace de raffinage en pile minuscule ; et
la pâte de papier usagé étant soumise à un raffinage en pile par le moyen de raffinage en pile (40) et étant mise en circulation dans le trajet de circulation de la pâte de papier usagé (39) pendant l'exécution du processus de raffinage en pile ;
**caractérisé en ce que** l'espace de raffinage en pile des surfaces actives du raffinage en pile (41a, 42a) est contrôlé de sorte à être rétréci progressivement, du début jusqu'à la fin du processus de raffinage en pile.

2. Procédé de fabrication de pâte appliqué dans l'appareil de recyclage de papier usagé selon la revendication 1,
dans lequel, lors du processus de raffinage en pile, l'espace de raffinage en pile du moyen de raffinage en pile (40) est contrôlé de sorte à être rétréci par étapes progressives, du début jusqu'à la fin du processus de raffinage en pile.

3. Procédé de fabrication de pâte appliqué dans l'appareil de recyclage de papier usagé selon la revendication 1.
dans lequel, lors du processus de raffinage en pile, l'espace de raffinage en pile du moyen de raffinage en pile (40) est contrôlé de sorte à être rétréci par étapes continues, du début jusqu'à la fin du processus de raffinage en pile.

4. Procédé de fabrication de pâte appliqué dans l'appareil de recyclage de papier usagé selon la revendication 1,
dans lequel le processus de fragmentation est **caractérisé par** les étapes de chargement du papier usagé dans un réservoir de fragmentation (15), d'alimentation d'eau dans le réservoir de fragmentation (15), dans une quantité correspondant à la quantité du papier usagé chargé, et d'agitation du papier usagé et de l'eau par l'intermédiaire d'un moyen d'agitation (16), agencé de manière rotative dans le réservoir de fragmentation (15), pour assurer ainsi la fragmentation et le raffinage en pile du papier usagé.

5. Procédé de fabrication de pâte appliqué dans l'appareil de recyclage de papier usagé selon la revendication 4,
dans lequel la quantité d'alimentation d'eau dans le processus de fragmentation est déterminée de sorte que la concentration de la pâte de papier utilisée fragmentée et raffinée en pile par le moyen d'agitation (16) puisse correspondre à une concentration maximale admissible en fonction de la capacité de raffinage en pile du moyen de raffinage en pile (40) lors du processus de raffinage en pile ultérieur.

6. Procédé de fabrication de pâte appliqué dans l'appareil de recyclage de papier usagé installé dans un boîtier d'appareil (6) de la taille d'un meuble, ledit dispositif de fabrication de pâte (2) comprenant une unité de fragmentation (10) servant à agiter, à défibrer à la meule et à fragmenter le papier usagé, et une unité de raffinage en pile (11) servant à soumettre à un raffinage en pile le papier usagé fragmenté dans l'unité de fragmentation (10),
dans lequel l'unité de raffinage en pile (11) forme un trajet de circulation de la pâte de papier usagé (39) par la mise en place d'au moins un moyen de raffinage en pile (40), pour assurer le raffinage en pile de la pâte de papier usagé, et englobant un moyen de circulation (69), pour faire circuler la pâte de papier usagé dans le trajet circulation de la pâte de papier usagé (39), et un moyen de contrôle du raffinage en pile (142) pour contrôler le moyen de raffinage en pile (42) et le moyen de circulation (69) de sorte à entraîner leur coopération mutuelle ;
le moyen de raffinage en pile (40) ayant la forme d'un défibrer (40), comportant une paire de disques de raffinage en pile (41, 42), adaptés pour effectuer une rotation relative et un entraînement relatif, les surfaces actives du raffinage en pile (41a, 42a) des disques de affinage en pile (41, 42) étant agencées de manière opposée à travers un espace de raffinage en pile minuscule ; et
le moyen de contrôle du raffinage en pile (142) étant adapté pour contrôler le moyen de raffinage en pile (40) et le moyen de circulation (89), de sorte à exécuter le processus de raffinage en pile de la pâte de papier usagé soumise à un raffinage en pile par le moyen de raffinage en pile (40) pendant qu'elle est mise en circulation dans le trajet de circulation de la pâte de papier usagé (39) par l'intermédiaire du moyen de circulation ;
ledit dispositif de fabrication de pâte (2) étant **caractérisé en ce que** le moyen de contrôle du raffinage en pile est adapté pour rétrécir l'espace de raffinage en pile entre les surfaces actives du raffinage en pile (41 a, 2a) de manière progressive, du début jusqu'à la fin du processus de raffinage en pile.

7. Dispositif de fabrication de pâte d'un appareil de recyclage de papier usagé selon la revendication 6,
dans lequel le moyen de raffinage en pile (40) a la forme d'un défibreur (40), comportant une paire de disques de raffinage en pile (41, 42) tournés et entraînés de manière relative, les surfaces actives du raffinage en pile (41a, 42a) des disques de raffinage en pile (41, 42) étant agencées de manière opposée à travers un espace de raffinage en pile minuscule ; et
les surfaces actives du raffinage en pile (41a, 42a) comportant des surfaces annulaires plates (41b, 42b) formées sur la circonférence externe des disques de raffinage en pile (41, 42), les surfaces annulaires plates (41b, 42b) formant l'espace de raffinage en pile (G).

8. Dispositif de fabrication de pâte d'un appareil de recyclage de papier usagé selon la revendication 7,
dans lequel le moyen de raffinage en pile (40) englobe un réservoir de raffinage en pile (45), comportant un orifice d'alimentation (45a) pour amener la pâte de papier usagé à partir du côté amont, et un orifice de décharge (45b) pour décharger la pâte de papier usagé soumise à un raffinage en pile vers le côté aval, une paire de disques de raffinage en pile (41, 42), agencés de sorte à effectuer une rotation relative dans le réservoir de raffinage en pile (45), et une source d'entraînement en rotation (46) pour entraîner une rotation relative et un déplacement relatif de ces disques de raffinage en pile (41, 42); et
la pâte de papier usagé amenée à partir de l'orifice d'alimentation (45a) étant mise sous pression et soumise à un raffinage en pile par les surfaces actives du raffinage en pile (41a, 42a) au cours de leur passage à travers l'espace de raffinage en pile (G) entre les disques de raffinage en pile (41, 42).

9. Dispositif de fabrication de pâte d'un appareil de recyclage de papier usagé selon la revendication 8,
dans lequel un moyen d'ajustement de l'espace (47) sert à entraîner un déplacement rotatif relatif de la paire de disques de raffinage en pile (41, 42) dans la direction de rotation axiale, et à ajuster l'espace de raffinage en pile de ces disques de raffinage en pile (41, 42).

10. Dispositif de fabrication de pâte d'un appareil de recyclage de papier usagé selon la revendication 7,
dans lequel un disque de la paire de disques de raffinage en pile (41, 42) est un disque de raffinage en pile fixe (41, 42), agencé de manière fixe dans la direction de rotation, l'autre disque étant un disque de raffinage en pile rotatif (41, 42), agencé de manière rotative ; et
une entrée (60) communiquant avec l'orifice d'alimentation (45a) du réservoir de raffinage en pile étant formée dans une position centrale de la surface active du raffinage en pile (41a, 42a) du disque de raffinage en pile fixe (41, 42), deux surfaces annuaires plates (41bn 42b) formées sur le bord périphérique externe des surfaces actives du raffinage en pile (41a, 42a) de la paire de disques de raffinage en pile (41, 42) formant une sortie communiquant avec un orifice de décharge (45b) du réservoir de raffinage en pile et comportant l'espace de raffinage en pile.

11. Dispositif de fabrication de pâte d'un appareil de recyclage de papier usagé selon la revendication 10,
dans lequel les surfaces actives du raffinage en pile (41 a, 42a) sont des surfaces de défibrage à la meule formées en accouplant de multiples grains abrasifs par l'intermédiaire d'un matériau liant.

12. Dispositif de fabrication de pâte d'un appareil de recyclage de papier usagé selon la revendication 6,
dans lequel l'unité de fragmentation (10) englobe un réservoir de fragmentation (15), comportant un orifice d'alimentation du papier usagé (7) pour amener et alimenter le papier usagé, un orifice de décharge (9) pour décharger la pâte de papier usagé fragmentée vers le côté aval, et un moyen d'agitation rotatif (16) agencé de manière rotative dans le réservoir de fragmentation (15), le papier usagé amené à partir de l'orifice d'alimentation du papier usagé (7) étant mélangé avec de l'eau et agité par le moyen d'agitation (16), avant sa fragmentation et son raffinage en pile.

13. Dispositif de fabrication de pâte d'un appareil de recyclage de papier usagé selon la revendication 12,
dans lequel l'unité de fragmentation (10) (10) comporte un moyen d'alimentation d'eau (17) pour amener de l'eau dans le réservoir de fragmentation (15).

14. Dispositif de fabrication de pâte d'un appareil de recyclage de papier usagé selon la revendication 12,
dans lequel un moyen déchiqueteur (160) est agencé au niveau de l'orifice d'alimentation du papier usagé (7) du réservoir de fragmentation (15), le papier usagé amené dans l'orifice d'alimentation du papier usagé (7) étant préalablement déchiqueté par le moyen déchiqueteur (160) et étant agité par le moyen d'agitation (16).

15. Dispositif de fabrication de pâte d'un appareil de recyclage de papier usagé selon la revendication 12,
dans lequel le trajet de circulation de la pâte de papier usagé (39) englobe le réservoir de fragmentation (15) de l'unité de fragmentation (10), le moyen d'agitation (16) de l'unité de fragmentation (10) étant entraîné et contrôlé lors de l'exécution du procédé de raffinage en pile.

16. Dispositif de fabrication de pâte d'un appareil de recyclage de papier usagé selon la revendication 15,
dans lequel, dans le trajet de circulation de la pâte de papier usagé (39), un trajet de dérivation (151), englobant un réservoir de réserve (150) pour stocker la pâte de papier usagé raffinée en pile par le moyen de raffinage en pile (40), est connecté par l'intermédiaire d'un moyen de commutation (152) ; et
lors de l'exécution du procédé de raffinage en pile, le moyen de computation (152) est entraîné et contrôlé de sorte à assurer une commutation et à utiliser de manière sélective le réservoir de fragmentation (15) de l'unité de fragmentation (10) et le réservoir de réserve (150) du trajet de dérivation (151).

17. Appareil de recyclage de papier usagé, comprenant, dans un boîtier d'appareil (6) de la taille d'un meuble, un dispositif de fabrication de pâte (2) selon l'une des revendications 6 à 16, une unité de fabrication de papier (4) pour fabriquer la pâte de papier usagé produite dans le dispositif de fabrication de pâte (2) et pour produire du papier recyclé, et une unité de contrôle du dispositif (5) pour entraîner et contrôler le dispositif de fabrication de pâte (2) et l'unité de fabrication de papier (4), de sorte à entraîner leur coopération mutuelle.

18. Appareil de recyclage de papier usagé selon la revendication 17, comprenant en outre :
un moyen d'ajustement de la concentration de la pâte (3), pour ajuster la concentration de la pâte de papier usagé amenée dans l'unité de fabrication de papier (4), en ajustant le rapport de mélange du papier usagé et de l'eau chargée dans l'appareil ;
le moyen d'ajustement de la concentration de la pâte (3) englobant un moyen d'ajustement de la concentration du raffinage en pile (3A) pour ajuster la concentration du raffinage en pile de la pâte de papier usagé dans le dispositif de fabrication de pâte (2), de manière correspondante à l'efficacité du moyen de raffinage en pile (40), un moyen d'ajustement de la concentration de la fabrication de papier (3B), pour ajuster la concentration de fabrication de papier de la pâte de papier usagé dans l'unité de fabrication de papier (4), de manière correspondante à la qualité du papier fini du papier recyclé destiné à être recyclé, et un moyen de contrôle de la concentration de la pâte (3C), pour assurer un entraînement et un contrôle, en coopération avec le moyen d'ajustement de la concentration du raffinage en pile (3A) et le moyen d'ajustement de la concentration de la fabrication de papier (3B).

19. Appareil de recyclage de papier usagé selon la revendication 18,
dans lequel le moyen d'ajustement de la concentration de la fabrication de papier (3B) englobe un moyen d'extraction à division (75), pour extraire par division uniquement une partie réduite spécifiée de l'ensemble du volume de la pâte de papier usagé produite dans la section de fabrication de pâte au cours du processus précédent, un moyen de préparation d'une suspension (76), pour préparer une suspension de pâte d'une concentration spécifiée, en ajoutant une quantité spécifiée d'eau en vue de l'ajustement de la concentration de la partie réduite spécifiée de la pâte de papier usagé divisée et extraite par le moyen d'extraction à division (75), et un moyen de contrôle de la concentration de la fabrication de papier (77), pour assurer l'entraînement et le contrôle en coopération avec le moyen d'extraction de division (75) et le moyen de préparation de la suspension (76).

20. Appareil de recyclage de papier usagé selon la revendication 18,
dans lequel le moyen d'ajustement de la concentration de la pâte (3) est du type à mesure du poids, pour ajuster le rapport de mélange du papier usagé et de l'eau chargée dans l'appareil par une mesure du poids, et pour ajuster la concentration de la pâte de papier usagé devant être amenée dans l'unité de fabrication de papier (4).
